# EUROPEAN PATENT SPECIFICATION

(11) **EP 4 439 849 B1**
(45) Date of publication and mention of the grant of the patent: **08.04.2026**
(21) Application number: 24166281.6
(22) Date of filing: 26.03.2024
(51) Int. Cl.: H01M 50/509, H01M 50/503, H01M 50/507, H01M 50/548, H01M 50/296, H01M 50/103, H01M 10/613, H01M 50/209, H01M 50/51, H01M 50/553

(54) **BATTERY PACK**
BATTERIEPACK
BLOC-BATTERIE

(30) Priority: 26.03.2023 KR 20230039398; 22.02.2024 KR 20240026042
(43) Date of publication of application: 02.10.2024
(73) Proprietor: Samsung SDI Co., Ltd., Yongin-si, Gyeonggi-do 17084 (KR)
(72) Inventor: Cho, Mansik, 17084 Yongin-si, Gyeonggi-do (KR); Kim, Jaemin, Yongin-si, Gyeonggi-do, 17084 (KR); Park, Shidong, 17084 Yongin-si, Gyeonggi-do (KR); Bae, Jangwoong, 17084 Yongin-si, Gyeonggi-do (KR)
(74) Representative: Gulde & Partner

(56) References cited:
- EP-A1- 3 264 496
- EP-A1- 3 734 709
- EP-A2- 4 102 631
- CN-A- 113 036 313

## Description

### BACKGROUND

### 1. Field

One or more embodiments relate to a battery pack.

### 2. Description of the Related Art

Generally, secondary batteries are chargeable and dischargeable unlike primary batteries that cannot be recharged. Secondary batteries are used as an energy source for mobile devices, electric vehicles, hybrid vehicles, electric bicycles, and uninterruptible power supplies. Depending on the type of external devices to which they are applied, the secondary batteries may be used in the form of a single battery or a module in which batteries are connected and bundled into one unit.

Small mobile devices, such as mobile phones, may operate for a certain period of time with an output and capacity of a single battery. However, when a long-term operation or high-power operation is required, such as in the case of electric vehicles or hybrid vehicles that consume a lot of power, a module type including multiple batteries is preferred due to issues of output and capacity, and an output voltage or output current may be increased with the number of built-in batteries.

EP 3 264 496 A discloses a battery pack according the preamble of claim1.

EP 4 102 631 A2 discloses a battery pack comprising prismatic cells with first and second output terminals formed together on a front side of the plurality of battery cells in the first direction and a third bus bar that electrically connects adjacent battery cells to each other by spanning over the top side of the plurality of the battery cells.

CN 113 036 313 A discloses a battery pack comprising prismatic cells with first and second output terminals formed together on a front side of the plurality of battery cells in the first direction and a third bus bar that electrically connects adjacent battery cells to each other by detouring a rear side of the plurality of the battery cells.

### SUMMARY

One or more embodiments include a battery pack including output terminals that have different polarities and are formed at adjacent positions to each other so that an electrical connection to a set device is easily achieved.

One or more embodiments include a battery pack that has improved electrical output due to shortening of an electrical path of an output terminal, improved space utilization through a simplified structure, and is robust against external vibrations and shocks.

One or more embodiments include a battery pack that may eliminate physical and electrical interference between a cooling structure of a battery cell and an electrical connection of the battery cell due to arrangement of a cooling plate for cooling the battery cell and a bus bar for electrically connecting the battery cell on a long side and short side of the battery cell facing each other along an intersecting direction.

One or more embodiments include a battery pack that may increase a cooling area by disposing cooling plates on the upper and lower surfaces of the long side and the short side of the battery cell, may avoid placing a burden on the short side forming the height dimension by arranging electrical connections on the first and second side surfaces forming the short side extending relatively short, and is advantageous for slimming.

Additional aspects will be set forth in part in the description which follows and, in part, will be apparent from the description, or may be learned by practice of the presented embodiments of the present disclosure.

According to one or more embodiments, a battery pack includes a plurality of battery cells arranged back and forth in a first direction, each having a pair of main surfaces arranged to face each other in a first direction and including upper and lower surfaces forming a pair of long sides facing each other, and first and second side surfaces forming a pair of short sides facing each other, a pair of the upper and lower surfaces and a pair of the first and second side surfaces connecting the pair of main surfaces to each other, respectively, first and second bus bars electrically connecting the plurality of battery cells to each other, and electrically connecting the battery cells alternately arranged so as not to be adjacent to each other in the first direction on the first and second side surfaces, respectively, and first and second output terminals formed together on a front side of the plurality of battery cells in the first direction and a third bus bar that electrically connects adjacent battery cells to each other by detouring a rear side of the plurality of the battery cells.

For example, the first and second output terminals may be drawn from first and second battery cells arranged adjacent to each other at a front position from among the plurality of battery cells, and the third bus bar may connect an n-1^{th} battery cell and an n^{th} battery cell (n>1, integer) disposed adjacent to each other at a rear position from among the plurality of battery cells.

For example, the battery pack may further include an upper cooling plate and a lower cooling plate respectively disposed on the upper and lower surfaces forming the long side of the battery cell.

For example, the upper and lower surfaces of the battery cells may face each other up-down direction in a second direction intersecting the first direction, and the first and second side surfaces of the battery cell may face each other in a third direction that intersects the first and second directions.

For example, the first bus bar or second bus bar may include a plurality of first bus bars or second bus bars that electrically connect non-adjacent battery cells to each other on the first or second side surfaces of the battery cell, wherein the plurality of first bus bars or second bus bars may include a 1st-1 bus bar or a 2nd-1 bus bar that connects non-adjacent battery cells to each other while bypassing an upper position relatively adjacent to the upper surface so as not to cause a short-circuit to each other, and a 1st-2 bus bar or a 2nd-2 bus bar that connects non-adjacent battery cells to each other while bypassing a lower position relatively adjacent to the lower surface so as not to cause a short-circuit to each other.

In other words, non-adjacent may refer to every second battery cell, every third battery cell or any other multiple of a natural number.

For example, the 1st-1 bus bar and the 1st-2 bus bar may be arranged to engage in a comb shape so as to interlock with each other on the first side surface of the battery cell and connect different pairs of battery cells that are matched not to be adjacent to each other without short circuiting by detouring the upper position and the lower position, respectively, and the 2nd-1 bus bar and the 2nd-2 bus bar may be arranged to engage in a comb shape so as to interlock with each other on the second side surface of the battery cell and connect different pairs of battery cells that are matched not to be adjacent to each other without short circuiting by detouring the upper position and the lower position, respectively.

For example, the 1st-1 bus bar may include a 1st-1 connection unit extending in the first direction at the upper position and a pair of 1st-1 branch portions extending from both ends of the 1st-1 connection unit toward the lower position and connected to the electrode terminals of the battery cells that are not adjacent to each other, and the 1st-2 bus bar may include a 1st-2 connection unit extending in the first direction at the lower position and a pair of 1st-2 branch portions extending from both ends of the 1st-2 connection unit toward the upper position and connected to the electrode terminals of the battery cells that are not adjacent to each other.

For example, the 2nd-1 bus bar may include a 2nd-1 connection portion extending along a first direction at an upper position, and a pair of 2nd-1 branch portion extending from both ends of the 2nd-1 connection unit toward the lower position and connected to the electrode terminals of the battery cells that are not adjacent to each other, and the 2nd-2 bus bar may include a 2nd-2 connection unit extending in the first direction at the lower position, and a pair of 2nd-2 branch portion extending from both ends of the 2nd-2 connection unit toward the upper position and connected to the electrode terminals of the battery cells that are not adjacent to each other.

For example, the third bus bar may extend to surround a rear-end plate disposed at the rear position of the plurality of battery cells and is bent on the opposite first and second side surfaces of the n-1^{th} battery cell and the n^{th} battery cell adjacent to each other at the rear position.

For example, the third bus bar may connect the n-1^{th} battery cell and the n^{th} battery cell arranged adjacent to each other at the rear position via a rear connection bar.

For example, the rear connection bar may include a first portion extending in the first direction in which the third bus bar extends at the upper position on the first and second side surfaces of the n-1^{th} battery cell and the n^{th} battery cell, and a second portion extending from the first portion toward the lower position and connected to electrode terminals of the n-1^{th} battery cell and the n^{th} battery cell.

For example, the battery pack may further include first and second terminal connection members each including other ends forming the first and second output terminals at a front-end plate disposed at the front position of the plurality of battery cells, while extending in the first direction from one end connected to the electrode terminal of the first and second battery cells arranged adjacent to each other at the front position among the plurality of battery cells.

For example, the first and second terminal connection members are connected to the first and second battery cells arranged adjacent to each other in the front position via the front connection bar.

For example, the first and second output terminals may be formed at an edge of the battery pack or at a distance from the side surfaces of the batty cells displaced towards the middle of the battery pack.

For example, the front connection bar may include a first portion extending in the first direction in which the first and second terminal connection members extend at upper positions on first and second side surfaces of the first and second battery cells, and a second portion extending from the first portion toward the lower position and connected to the electrode terminals of the first and second battery cells.

For example, a connection portion of the 1st-1 bus bar and a connection portion of the 2nd-1 bus bar extending across the upper position among the first and second bus bars, a first portion of the rear connection bar connected to the third bus bar, and a first portion of the first and second terminal connection members including the first and second output terminals may be disposed at the upper position of the same second level in the second direction corresponding to the up-down direction.

For example, a connection portion of the 1st-2 bus bar and the connection portion of the 2nd-2 bus bar extending across the lower position among the first and second bus bars may be disposed at the lower position of the same first level in the second direction corresponding to the up-down direction.

For example, the first and second bus bars may be disposed on a pair of side plates extending across the first and second side surfaces to cover the first and second side surfaces of the plurality of battery cells and are electrically connected to the electrode terminals exposed through the first and second terminal holes formed in the side plate.

For example, the battery pack may further include cover pieces in the first and second terminal holes to close a portion of the first and second terminal holes.

For example, the cover piece may block the first bus bar or the second bus bar electrically connecting a pair of battery cells that are alternately matched to each other on the first or second side surface of the battery cell from being erroneously connected to a battery cell interposed between a pair of the battery cells to be connected to each other as connection target.

For example, the connection portion of the 1st-1 bus bar and the connection portion of the 2nd-1 bus bar extending across the upper position among the first and second bus bars, a first portion of the rear connection bar connected to the third bus bar, and the first portion of the first and second terminal connection members including the first and second output terminals may be disposed at a relatively upper position, the connection portion of the 1st-2 bus bar and the connection portion of the 2nd-2 bus bar extending across the lower position among the first and second bus bars may be disposed at a relatively lower position in the second direction, and the cover piece may be formed on a lower portion of the first and second terminal holes extending across the connection portion of the 1st-2 bus bar or the connection portion of the 2nd-2 bus bar.

For example, the 1st-1 bus bar or the 2nd-1 bus bar may include the 1st-1 connection unit or the 2nd-1 connection unit disposed on the side plate and a pair of 1st-1 branch portions or a pair of 2nd-1 branch portions that are connected to the electrode terminal extended from the 1st-1 connection unit or the 2nd-1 connection unit and exposed to the outside of the side plate through the first and second terminal holes of the side plate and are formed to be stepwise outward from the 1st-1 connection unit or the 2nd-1 connection unit, and the 1st-2 bus bar or the 2nd-2 bus bar includes a pair of 1st-2 branch portions or a pair of 2nd-2 branch portions connected to the electrode terminal exposed to the outside of the side plate through the first and second terminal holes of the side plate, and the 1st-2 connection unit or the 2nd-2 connection unit that connect the pair of 1st-2 branch portions or the pair of 2nd-2 branch portions to each other and formed to be stepwise outward from the pair of 1st-2 branch portions or the pair of 2nd-2 branch portions to accommodate the cover piece.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a perspective view of a battery pack viewed from a front side, according to embodiments;
FIG. 2 is a perspective view of the battery pack viewed from a rear side, according to embodiments;
FIG. 3 is an exploded perspective view of the battery pack shown in FIG. 1;
FIGS. 4A and 4B respectively are enlarged perspective views of portions IVa and IVb of FIG. 3;
FIG. 5 is an enlarged perspective view of a battery cell shown in FIG. 3;
FIG. 6 is a partially exploded perspective view of the battery pack shown in FIG. 3; and
FIG. 7 is a diagram showing an arrangement of upper and lower cooling plates of a battery pack according to embodiments.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Hereinafter, a battery pack according to embodiments will be described with reference to the accompanying drawings.

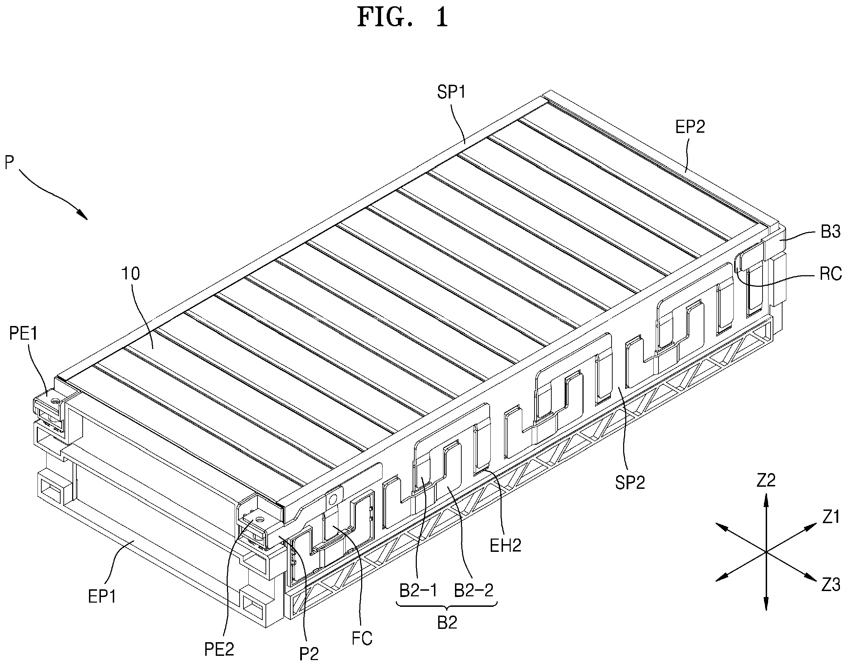

FIG. 1 is a perspective view of a battery pack P viewed from a front side according to embodiments.

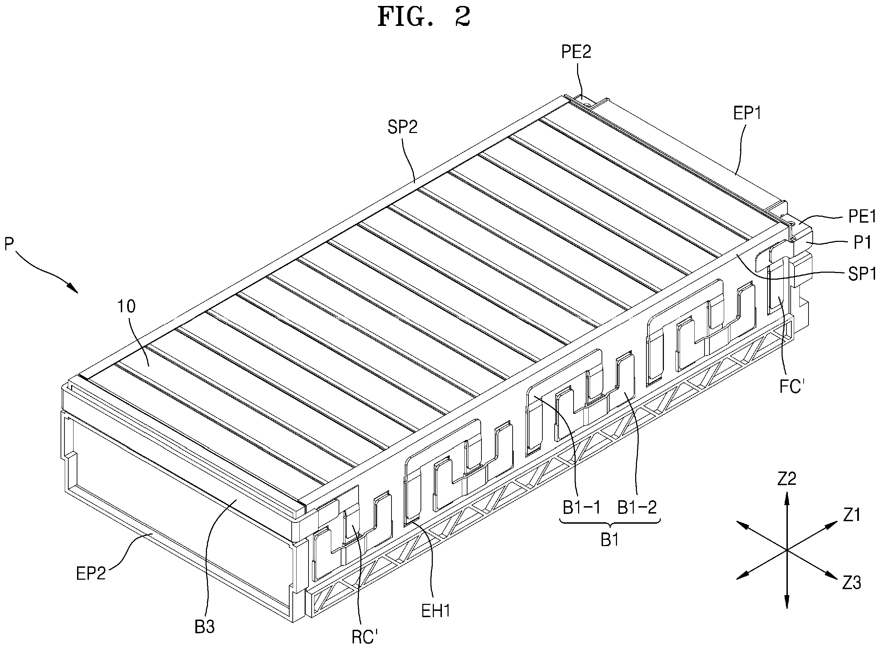

FIG. 2 is a perspective view of the battery pack P viewed from a rear side according to embodiments.

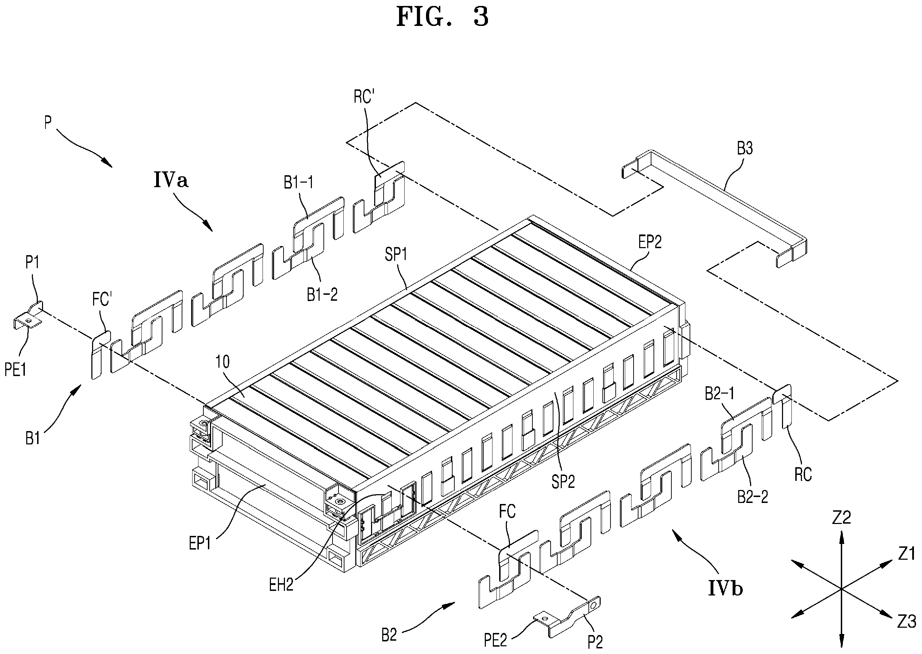

FIG. 3 is an exploded perspective view of the battery pack P shown in FIG. 1.

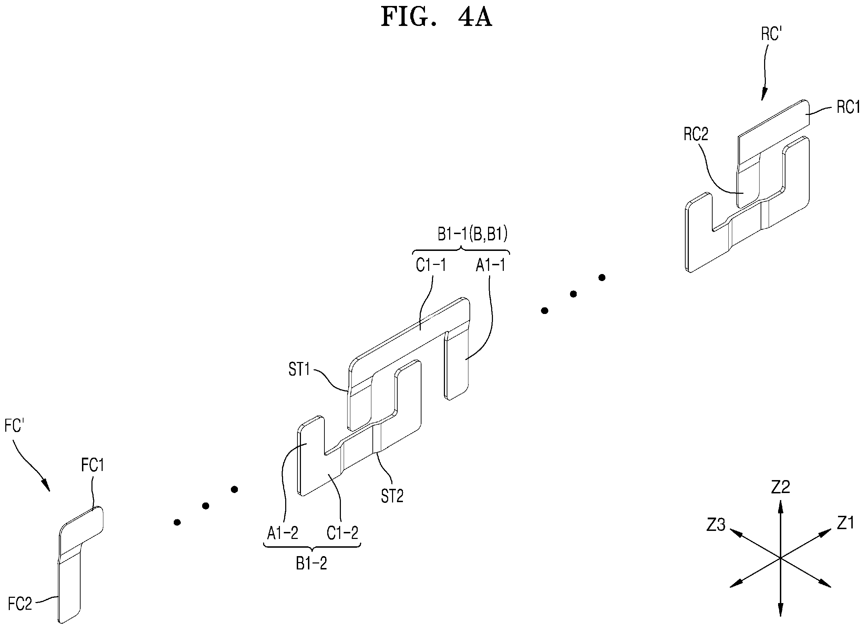

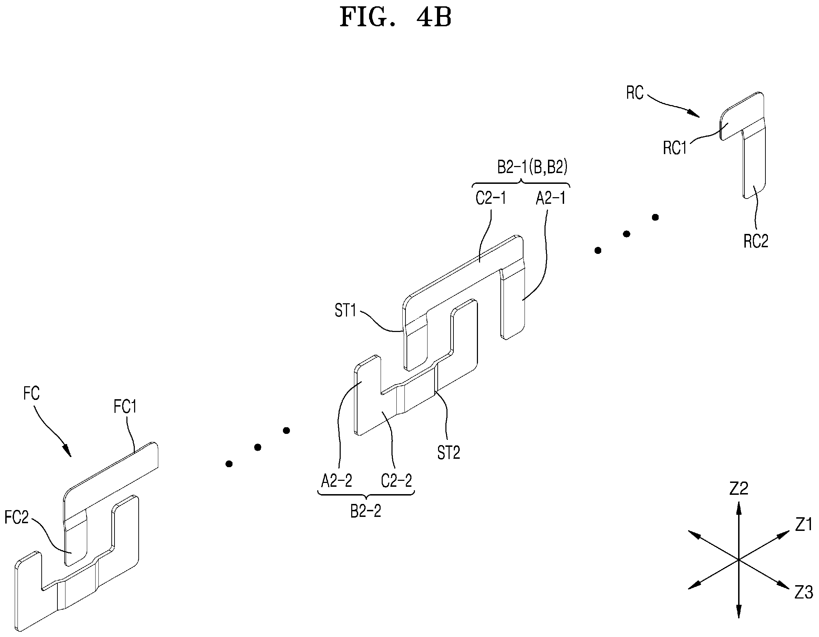

FIGS. 4A and 4B respectively are enlarged perspective views of portions IVa and IVb of FIG. 3.

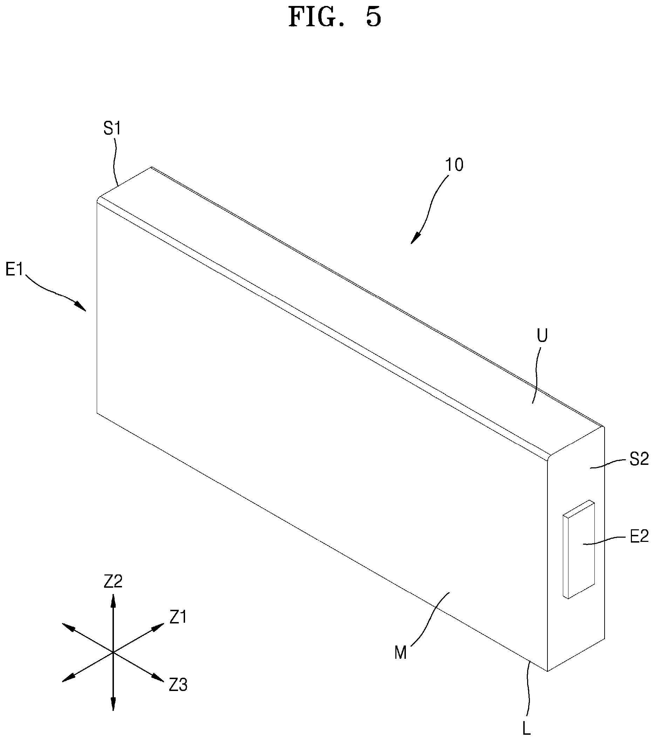

FIG. 5 is an enlarged perspective view of a battery cell shown in FIG. 3.

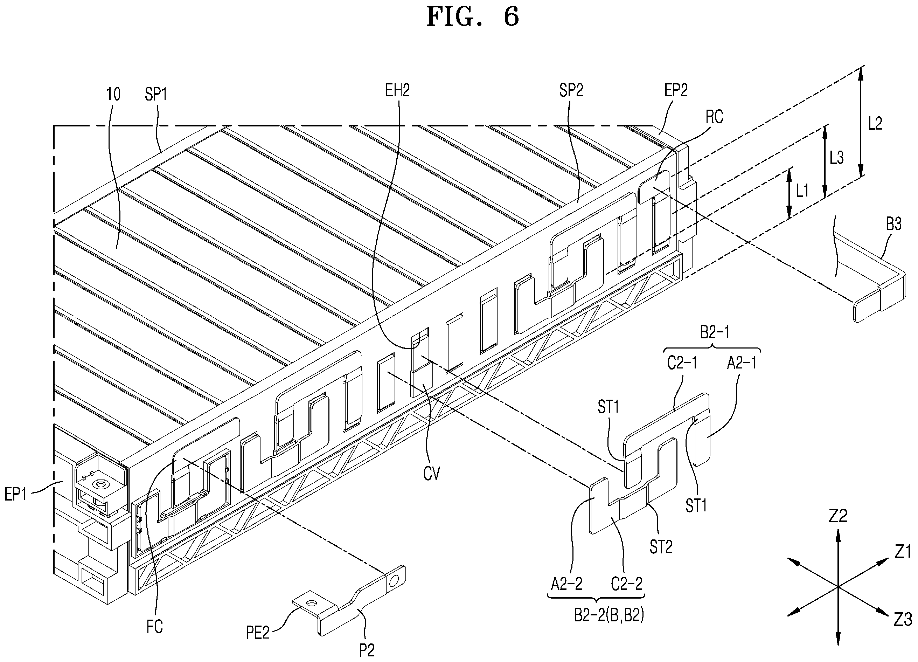

FIG. 6 is a partially exploded perspective view of the battery pack P shown in FIG. 3.

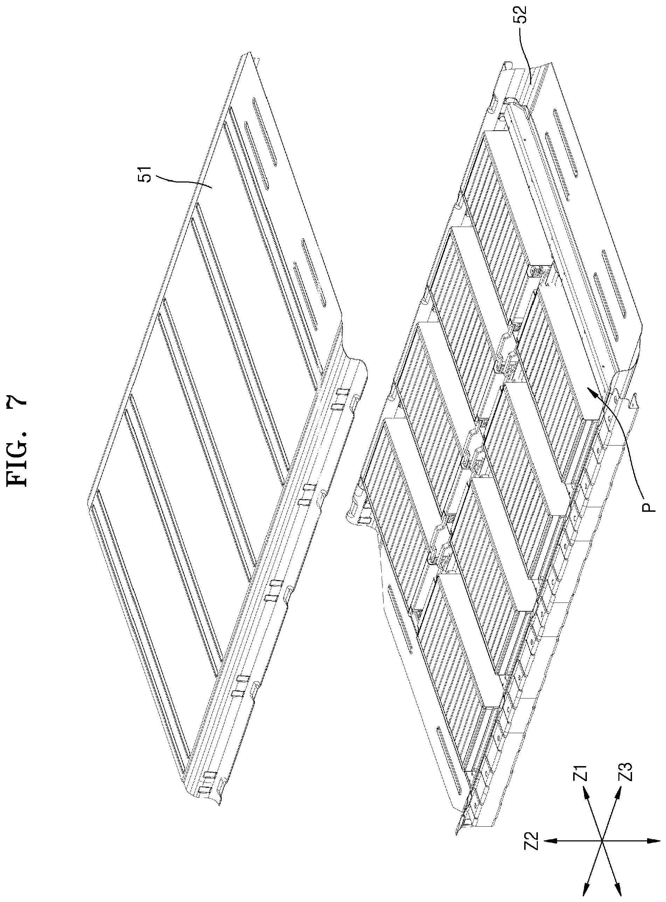

FIG. 7 is a diagram showing an arrangement of upper and lower cooling plates of the battery pack P according to embodiments.

Referring to the drawings, the battery pack P according to embodiments may include a plurality of battery cells 10 arranged back and forth in a first direction Z1, each including a pair of main surfaces M arranged to face each other in the first direction Z1, an upper surface U and a lower surface L connecting the pair of main surfaces M and forming a pair of long sides facing each other, and first and second side surfaces S1 and S2 forming a pair of short sides facing each other;
first and second bus bars B1 and B2 electrically connecting the plurality of battery cells 10 to each other so that the battery cells 10 alternately arranged are connected so as not to be adjacent to each other in an arrangement direction of the battery cells 10 on the first and second side surfaces S1 and S2, respectively; and
a third bus bar B3 that electrically connects first and second output terminals PE1 and PE2 formed together on a front side of the plurality of battery cells 10 in the first direction Z1 to the plurality of battery cells 10 adjacent to each other by detouring a rear side of the plurality of battery cells 10.

In embodiments of the present disclosure, the plurality of battery cells 10 forming the battery pack P may be disposed so that the main surfaces M formed with relatively wide surfaces are arranged to face each other along the first direction Z1 in which the plurality of battery cells 10 are arranged, and also may be disposed so that the pair of main surfaces M are arranged to face each other in the first direction Z1 in which the plurality of battery cells 10 are arranged. For example, in embodiments of the present disclosure, the battery cell 10 may include the first and second side surfaces S1 and S2 facing each other along a third direction Z3 that intersects the first and second directions Z1 and Z2, wherein the first and second side surfaces S1 and S2 form the long side of the battery cell 10 to connect the pair of main surfaces M facing each other along the first direction Z1 and form short sides of the battery cell 10 with the upper surface U and the lower surface L facing each other in the second direction Z2 corresponding to an up-down direction.

In embodiments of the present disclosure, the upper and lower surface U and L and the first and second side surfaces S1 and S2 connect the pair of main surfaces M facing each other in the first direction Z1 in which the plurality of battery cells 10 are arranged and may form a long side extending relatively long and a short side extending relatively short. More specifically, the upper surface U and the lower surface L of the battery cells 10 may form a pair of long sides arranged facing each other in the up-down direction, that is, in the second direction Z2 intersecting the first direction Z1 in which the plurality of battery cells 10 are arranged back and forth, and the first and second side surfaces S1 and S2 of the battery cell 10 may form a pair of short sides arranged to face each other in a third direction Z3 that intersects the first and second directions Z1 and Z2. In embodiments of the present disclosure, first and second electrode terminals E1 and E2 having different polarities may be formed on the first and second side surfaces S1 and S2 of the battery cell 10, respectively. Also, as described below, the first and second bus bars B1 and B2 disposed on the first and second sides S1 and S2 of the battery cell 10 may connect different first and second electrode terminals E1 and E2 of the battery cells 10 arranged alternately so as not to be adjacent to each other while forming a series connection. For example, in embodiments, the first and second bus bars B1 and B2 may form a series connection of different battery cells 10 arranged alternately so as not to be adjacent to each other.

In embodiments of the present disclosure, the battery pack P may include a series connection of the plurality of battery cells 10 forming the battery pack P and include a series connection between each of unit battery cells 10 of a plurality of battery cells 10 forming the battery pack P. For example, the battery pack P in embodiments, may not include a parallel connection between different battery cells 10. However, the battery pack P according to various embodiments may include a series connection of parallel modules arranged alternately so as not to be adjacent to each other in the first direction Z1 in which the plurality of parallel modules is arranged using a parallel module in which two or more adjacent battery cells 10 are connected in parallel as a unit. For example, in various embodiments, the parallel module may include a parallel connection of a single unit battery cell 10 to two or more battery cells 10, and in the embodiments shown in the drawings accompanied to this specification, it may be understood that each parallel module includes a unit battery cell 10 (a form of a parallel module including a unit battery cell 10). Also, unlike shown in the drawings, the parallel module may include two or more battery cells 10 electrically coupled to each other through a parallel connection in which two or more battery cells 10 are connected in parallel.

The battery pack P according to embodiments may include a series connection of different battery cells 10 arranged alternately so as not to be adjacent to each other in the first direction Z1 corresponding to the arrangement direction of the plurality of battery cells 10. To this end, the first and second bus bars B1 and B2 may electrically connect terminals of different polarities of the battery cells 10 that are alternately arranged on the first and second side surface surfaces S1 and S2 of the battery cell 10 so as not to be adjacent to each other. Accordingly, in embodiments of the present disclosure, the first and second electrode terminals E1 and E2 of the battery cells 10 may be arranged alternately so as not to be adjacent to each other in the first direction Z1 and/or may be exposed through same side surface as the first and second side surfaces S1 and S2. Also, on the one hand, the first and second electrode terminals E1 and E2 of opposite polarity are connected in series through the first bus bar B1 or the second bus bar B2 disposed on the first side surface S1 or the second side surface S2, and the first and second electrode terminals E1 and E2 having the same polarity of the battery cells 10 adjacent to each other in the first direction may be exposed through same side surface as the first and second side surfaces S1 and S2. The first and second electrode terminals E1 and E2 may be arranged so that left and right positions thereof are reversed to each other in the first direction Z1 by using two battery cells 10 adjacent to each other as one unit, that is, the first and second side surfaces S1 and S2, on which the first and second electrode terminals E1 and E2 are formed, may be arranged in a reversed pattern.

The electrical path formed by the plurality of battery cells 10 forming the battery pack P may be arranged to expose the first and second electrode terminals E1 and E2 of opposite polarities on same side surface as the first side surface S1 or the second side surface S2 of the battery cells 10 arranged alternately so as not to be adjacent to each other so that the first and second bus bars B1 and B2 respectively disposed on the first and second side surfaces S1 and S2 of the battery cell 10 are alternately connected in series with a pair of battery cells 10 that are alternately matched. An electrical path connects a first group of battery cells 10, which are alternately arranged so as not to be adjacent to each other, in a zigzag pattern from the front position to the rear position, and an electrical path, a direction of which is reversed from the rear position to the front position through the third bus bar B3, connects a second group of battery cells 10 arranged alternately so as not to adjacent to each other in another zigzag pattern. The first and second electrode terminals E1 and E2 of the same polarity of the battery cells 10 adjacent to each other in the first direction may be exposed on same surface as the first side surface S1 or the second side surface S2 of the battery cells 10. The first and second electrode terminals E1 and E2 may be arranged so that left and right positions thereof are reversed to each other in the first direction Z1 by using two battery cells 10 adjacent to each other in the first direction Z1 as one unit, that is, the first and second side surfaces S1 and S2, on which different first and second electrode terminals E1 and E2 are formed, may be arranged in a reversed pattern. For example, in embodiments including a parallel module in which two or more battery cells 10 arranged adjacent to each other are connected in parallel, the battery cells 10 may be arranged so that the left and right arrangements of the battery cells 10 are reversed by using a pair of two adjacent parallel modules as one unit.

In embodiments of the present disclosure, upper and lower cooling plates 51 and 52 for cooling the battery cell 10 may be disposed on at least one long side among the upper surface U and the lower surface L of the battery cell 10 forming a relatively long side. For example, in embodiments of the present disclosure, an upper cooling plate 51 may be disposed on the upper surface U side of the battery cell 10, and a lower cooling plate 51 may be disposed on the lower surface L side of the battery cell 10. Referring to FIG. 7, the battery pack P, together with other battery packs P formed of substantially same structure, may constitute a power supply device for supplying driving power to a set device, such as an electric vehicle. At this time, the upper cooling plate 51 or the lower cooling plate 52 disposed on the upper surface U or the lower surface L of the battery pack P may extend across the upper surface U and the lower surface L of the plurality of battery packs P forming the power supply device to realize cooling together with respect to the plurality of the battery packs P, and also, the upper cooling plate 51 or the lower cooling plate 52 may form a housing of the power supply device, align an assembly position of the plurality of battery packs P, and structurally bind the plurality of battery packs P. In embodiments of the present disclosure, the first and second side surfaces S1 and S2 forming a height dimension of the battery pack P in the second direction Z2 which corresponds to the up-down direction may form a short side extending relatively short. Thus, the battery pack P is provided advantageous for slim size. To make a slim power supply device to be disposed at a bottom of a vehicle, such as an electric vehicle, a housing of the power supply device may be implemented from the upper cooling plate 51 and the lower cooling plate 52 disposed on the upper surface U and the lower surface of the battery pack P forming a power supply device, and thus, a power supply device favorable for slimming may be provided.

In embodiments of the present disclosure, a bus bar B for electrical connection of the battery cell 10 may be disposed on at least one short side of the first and second side surfaces S1 and S2 of the battery cell 10 forming a relatively short side. For example, in embodiments of the present disclosure, the first and second bus bars B1 and B2 may be disposed on the first and second side surfaces S1 and S2 opposite to each other of the battery cell 10 forming a pair of opposite short sides of the battery cell 10.

In embodiments of the present disclosure, by disposing the upper cooling plate 51 and the lower cooling plate 52 for cooling the battery cell 10 and the bus bar B for electrical connection of the battery cells 10 are disposed on the long side and the short side of the battery cell 10 disposed to face each other in the second and third directions Z2 and Z3, the physical interference and electrical interference between the cooling of the battery cell 10 and the electrical connection may be eliminated. For example, a decrease in cooling performance due to a thermal resistance between the battery cell 10 and the upper cooling plate 51 and the lower cooling plate 52 may be prevented by eliminating the physical interference between the cooling of the battery cell 10 and the electrical connection of the battery cell 10, and also, electrically, a short-circuit of the battery cell 10 may be prevented by eliminating the electrical interference between cooling of the battery cell 10 and the electrical connection of the battery cell 10.

In embodiments of the present disclosure, the first bus bar B1 may electrically connect different battery cells 10 that are alternately arranged so as not to be adjacent to each other on the first side surface S1 of the battery cell 10, and similarly, the second bus bar B2 may electrically connect different battery cells 10 that are alternately arranged so as not to be adjacent to each other on the second side surface S2 of the battery cell 10.

In embodiments of the present disclosure, the first and second bus bars B1 and B2 may electrically connect different battery cells 10 that are alternately arranged so as not to be adjacent to each other on the first and second side surfaces S1 and S2 of the battery cell 10, respectively. Also, as described below, by electrically connecting different battery cells 10 that are alternately arranged so as not to be adjacent to each other, rather than electrically connecting the first and second bus bars B1 and B2 to the battery cells 10 arranged adjacent to each other, the first and second output terminals PE1 and PE2 of the battery pack P may be concentrated on the front side of the battery pack P. Also, by arranging the first and second output terminals PE1 and PE2 of the battery pack P adjacent to the front side of the battery pack P, the electrical connection between the battery pack P and set devices that use the battery pack P as a driving power source may be easily implemented, and because the first and second output terminals PE1 and PE2 are pulled out together to the front of the battery pack P, an electrical path for forming the first and second output terminals PE1 and PE2 may be reduced. As described below, throughout the specification, the first and second output terminals PE1 and PE2 are concentrated on the front side of the battery cell 10, the first and second output terminals PE1 and PE2 are formed adjacent to the front side of the battery cell 10, or the first and second output terminals PE1 and PE2 are drawn together towards the front side of the battery cell 10 which may indicate that the first and second output terminals PE1 and PE2 of the battery pack P are drawn from the first and second battery cells 10 adjacent to each other forming the front side of the battery pack P. For example, in embodiments of the present disclosure, the first and second output terminals PE1 and PE2 of the battery pack P may be provided as other end of the first and second terminal connection members P1 and P2 of one end directly connected to the first and second battery cells 10 disposed adjacent to each other at a front position of the battery pack P, for example, in embodiments of the present disclosure, the first and second output terminals PE1 and PE2 may be formed as a part of the first and second terminal connection members P1 and P2 extending from the first and second battery cells 10 disposed adjacent to each other at the front position from among the plurality of battery cells 10.

In embodiments of the present disclosure, as the first and second output terminals PE1 and PE2 are formed intensively on the front side of the battery pack P, a third bus bar B3 for returning the electrical path may be disposed on the rear side of the battery pack P. For example, in embodiments of the present disclosure, the electrical path formed by the plurality of battery cells 10 may form a U- turn path while passing from the first output terminal PE1 on the front side through the third bus bar B3 on the rear side, and again may form a path toward the second output terminal PE2 on the front side. For reference, throughout the specification, the front or rear of the battery pack P may denote the front or rear of the plurality of battery cells 10 forming the battery pack P. In embodiments of the present disclosure, the third bus bar B3 may electrically connect an n-1^{th} battery cell 10 and an n^{th} battery cell 10 to each other, which form the rear side of the battery cell 10 among the plurality of battery cells 10, and may electrically connect the neighboring n-1^{th} battery cells 10 and the n^{th} battery cell 10 to each other, which form the rear side of the battery cell 10 among the plurality of battery cells 10. For reference, in embodiments of the present disclosure, the battery pack P may include a total of n battery cells 10 including the first battery cell 10, the second battery cell 10, ... the n-1^{th} battery cell 10, and the n^{th} battery cell 10 as sequentially arranged the plurality of battery cells 10 towards the rear position where the third bus bar B3 is disposed from the front position where the first and second output terminals PE1 and PE2 are formed, for example, n is an integer and may denote an integer greater than 1, and the battery pack P according to embodiments may include two or more battery cells 10.

In embodiments of the present disclosure, the first and second output terminals PE1 and PE2 may be drawn from the first and second battery cells 10 adjacent to each other forming the front side among the plurality of battery cells 10, and the n^{th} and n-1^{th} battery cells 10 adjacent to each other forming the rear side of the battery pack P may be electrically connected to each other through the third bus bar B3. In embodiments of the present disclosure, by drawing out the first and second output terminals PE1 and PE2 from the first and second battery cells 10 that are adjacent to each other on the front side among the plurality of battery cells 10, while the first and second output terminals PE1 and PE2 are concentrated on the front side of the battery pack P, the electrical connection of the plurality of battery cells 10 may be returned from the rear side to the front side through the third bus bar B3 that electrically connect the n^{th} and n-1^{th} battery cells 10 that are adjacent to each other on the rear side among the plurality of battery cells 10.

In embodiments of the present disclosure, the first and second bus bars B1 and B2 may electrically connect the battery cells 10 to each other alternately arranged so as not to be adjacent to each other on the first and second side surfaces S1 and S2 of the battery cell 10, respectively and may electrically connect different battery cells 10 arranged alternately so as not to be adjacent to each other in the first direction Z1 in which the plurality of battery cells 10 are arranged, and the third bus bar B3 may return an electrical path of the plurality of battery cells 10 from the rear side to the front side while connecting the n^{th} and n-1^{th} battery cells 10 disposed at the rear position among the plurality of battery cells 10 to each other. For example, in embodiments of the present disclosure, the electrical path of the plurality of battery cells 10 may be formed from the front position towards the rear position, that is, towards the n-1^{th} battery cell 10 at the rear position from the first battery cell 10 at the front position connected to the first output terminal PE1, may be formed from the front position toward the rear position while alternately passing through the first and second bus bars B1 and B2 through the first and second bus bars B1 and B2 formed on the first and second side surfaces S1 and S2 of the battery cell 10, and may be connected to the n^{th} battery cell 10 from the n-1^{th} battery cell 10 through the third bus bar B3 formed at the rear position of the battery cell 10. The electrical path toward the rear position from the front position through the third bus bar B3 may be returned from the rear position towards the front position, for example, may be connected from the rear position to the front position from the n^{th} battery cell 10 in the rear position connected to the third bus bar B3 toward the second battery cell 10 in the front position, and may be connected towards the front position from the rear position while alternately passing the first and second bus bars B1 and B2 formed on the first and second side surfaces S1 and S2 of the battery cell 10. For example, the electrical path of the plurality of battery cells 10 may be formed between the first output terminal PE1 connected to the first battery cell 10 in the front position and the second output terminal PE2 connected to the second battery cell 10 in the front position, and may transmit discharge power of the battery cell 10 towards a set device (e.g., an external load) or may transmit charge power toward the battery cell 10 from a set device (e.g., an external charger) through a set device connected between the first and second output terminals PE1 and PE2 at the front position of the battery pack P.

In embodiments of the present disclosure, the electrical connection between the front and rear positions in the first direction Z1 in which the plurality of battery cells 10 are formed may be formed by alternately passing through the first and second bus bars B1 and B2 formed on the first and second side surfaces S1 and S2 of the battery cell 10, and the first and second output terminals PE1 and PE2 may be connected to the first and second battery cells 10 disposed at the front position among the plurality of battery cells 10 formed in the first direction Z1. The n-1^{th} and n^{th} battery cells 10 disposed at the rear position among the plurality of battery cells 10 formed in the first direction Z1 may be connected to each other through the third bus bar B3, and the direction of electrical connection of the battery cell 10 may be returned from the rear position to the front position.

In embodiments of the present disclosure, the first bus bar B1 may include a plurality of first bus bars B1 that electrically connect non-adjacent battery cells 10 to each other on the first side surface S1 of the battery cell 10, and more specifically, the first bus bar B1 may include a 1st-1 bus bar B1-1 that connects non-adjacent battery cells 10 to each other while detouring a relatively upper position of the battery cell 10 (for example, a second level L2 from a bottom of a flat portion of side plates SP, SP1, and SP2. The second level L2 may be higher than the first level L1. The second level may be at 2/3rd or 3/4th of the height of the battery cell 10 in the second direction Z2) so as not to cause a short-circuit to each other and a 1st-2 bus bar B1-2 that connects non-adjacent battery cells 10 to each other while detouring a lower position of the battery cell 10 (for example, a first level L1 from the bottom of the flat portion of the side plates SP, SP1, and SP2; the first level L1 may be at 1/3rd or 1/4th of the height of the battery cell 10 in the second direction Z2). In other words, the 1st-1 bus bar B1-1 may also be referred to as 1^{st} first bus bar B1-1. Further, the 1st-2 bus bar B1-2 may also be referred to as the 2^{nd} first bus bar B1-2. Additionally, detouring may refer to that an electrode terminal of an intermediate cell is circumvented along an upper bath around said electrode terminal. For example, the 1st-1 bus bar B1-1 and the 1st-2 bus bar B1-2 may avoid short-circuit with respect to each other by electrically connecting different pairs of battery cells 10 that are matched not to be adjacent to each other while detouring the upper and lower positions in the second direction Z2, respectively. For example, in embodiments of the present disclosure, the 1st-1 bus bar B1-1 and the 1st-2 bus bar B1-2 may be disposed in a comb shape in which the 1st-1 bus bar B1-1 and the 1st-2 bus bar B1-2 interlock into each other on the first side surface S1 of the battery cell 10, and as described below, the 1st-1 bus bar B1-1 and the 1st-2 bus bar B1-2 respectively may electrically connect the pairs of battery cells 10 arranged to be misaligned with each other while avoiding short circuiting with respect to each other through the 1st-1 connection unit C1-1 and the 1st-2 connection unit C1-2 disposed on the relatively upper and lower positions. Upper and lower portions may refer to the middle of a battery cell 10 in its height direction, as a reference point.

In embodiments of the present disclosure, the first bus bar B1 may include a pair of branch portions A1-1 and A1-2 coupled to the first and second electrode terminals E1 and E2 of the battery cells 10 arranged alternately so as not to be adjacent to each other and the 1st-1 connection unit C1-1 and the 1st-2 connection unit C1-2 extending between the pair of branch portions A1-1 and A1-2 to connect the pair of branch portions A1-1 and A1-2 to each other, and the 1st-1 bus bar B1-1 and the 1st-2 bus bar B1-2 may include the 1st-1 connection unit C1-1 and the 1st-2 connection unit C1-2 formed respectively at upper and lower positions to avoid short circuiting with respect to each other while connecting between pairs of different battery cells 10 arranged to be misaligned with each other. In other words, the 1st-1 connection unit C1-1 may also be referred to as 1^{st} first connection unit C1-1. Further, the 1st-2 connection unit C1-2 may also be referred to as 2^{nd} first connection unit C1-2. For example, the 1st-1 branch portion A1-1 and the 1st-2 branch portion A1-2 of the 1st-1 bus bar B1-1 and the 1st-2 bus bar B1-2 may connect between the first and second electrode terminals E1 and E2 formed at substantially the same level in the second direction Z2, and the 1st-1 connection unit C1-1 and the 1st-2 connection unit C1-2 respectively connecting the 1st-1 branch portion A1-1 of the 1st-1 bus bar B1-1 and the 1st-2 branch portion A1-2 of the 1st-2 bus bar B1-2 may be disposed at the upper and lower positions in the second direction Z2 to avoid a short-circuit therebetween. In other words, the 1st-1 branch portion A1-1 may also be referred to as 1^{st} first branch portion A1-1. Further, the 1st-2 branch portion A1-2 may also be referred to as 2^{nd} first branch portion A1-2.

More specifically, the 1st-1 bus bar B1-1 may include the 1st-1 connection unit C1-1 extending in the first direction Z1 in which the battery cells 10 are arranged at the upper position and a pair of 1st-1 branch portions A1-1 connected to the first and second electrode terminals E1 and E2 of the battery cells 10 that extend from both ends of the 1st-1 connection unit C1-1 toward the lower position in the second direction Z2 perpendicular to the first direction Z1 and are not adjacent to each other. Similarly, the 1st-2 bus bar B1-2 may include the 1st-2 connection unit C1-2 extending in the first direction Z1 in which the battery cells 10 are arranged at the lower position and a pair of 1st-2 branch portions A1-2 connected to the first and second electrode terminals E1 and E2 of the battery cells 10 that extend from both ends of the 1st-2 connection unit C1-2 toward the upper position in the second direction Z2 perpendicular to the first direction Z1 and are not adjacent to each other.

In embodiments of the present disclosure, the second bus bar B2 may include a plurality of second bus bars B2 electrically connecting non-adjacent battery cells 10 to each other on the second side surface S2 of the battery cell 10, and more specifically, the second bus bar B2 may include a 2nd-1 bus bar B2-1 that connects non-adjacent battery cells 10 to each other while detouring the relatively upper position (for example, the second level L2 from the bottom of the flat portion of the side plates SP, SP1, and SP2) so as not to be short-circuited with respect to each other and a 2nd-2 bus bar B2-2 connecting non-adjacent battery cells 10 to each other while detouring the lower position (e.g., the first level L1 from the bottom of the flat portion of the side plates SP, SP1, and SP2). The 2nd-1 bus bar B2-1 and the 2nd-2 bus bar B2-2 may avoid short-circuit with respect to each other by electrically connecting different pairs of battery cells 10 that are matched not to be adjacent to each other while detouring the upper and lower positions in the second direction Z2, respectively. In other words, the 2nd-1 bus bar B2-1 may also be referred to as 1^{st} second bus bar B2-1. Further, the 2nd-2 bus bar B2-2 may also be referred to as the 2^{nd} second bus bar B2-2. For example, in embodiments of the present disclosure, the 2nd-1 bus bar B2-1 and the 2nd-2 bus bar B2-2 may be disposed in a comb shape in which the 2nd-1 bus bar B2-1 and the 2nd-2 bus bar B2-2 interlock into each other on the second side surface S1 of the battery cell 10, and as described below, the 2nd-1 bus bar B2-1 and the 2nd-2 bus bar B2-2 respectively may electrically connect the pairs of battery cells 10 arranged to be misaligned with each other while avoiding short circuiting with each other through the 2nd-1 connection unit C2-1 and the 2-2 connection unit C2-2 disposed at relatively upper and lower positions.

In embodiments of the present disclosure, the second bus bars B may include a pair of branch portions A2-1 and A2-2 coupled to the first and second electrode terminals E1 and E2 of the battery cells 10 arranged alternately so as not to be adjacent to each other and the 2nd-1 connection unit C2-1 and the 2nd-2 connection unit C2-2 extending between the pair of branch portions A2-1 and A2-2 to connect the pair of branch portions A2-1 and A2-2 to each other, and the 2nd-1 bus bar B2-1 and the 2nd-2 bus bar B2-2 may include the 2nd-1 connection unit C2-1 and the 2nd-2 connection unit C2-2 formed respectively at upper and lower positions to avoid short circuiting with respect to each other while connecting between pairs of different battery cells 10 arranged to be misaligned with each other. In other words, the 2nd-1 connection unit C2-1 may also be referred to as 1^{st} second connection unit C2-1. Further, the 2nd-2 connection unit C2-2 may also be referred to as 2^{nd} second connection unit C2-2. For example, the 2nd-1 branch portion A2-1 and the 2nd-2 branch portion A2-2 of the 2-1 bus bar B2-1 and the 2nd-2 bus bar B2-2 may connect between the first and second electrode terminals E1 and E2 formed at substantially the same level in the second direction Z2, and the 2nd-1 connection unit C2-1 and the 2nd-2 connection unit C2-2 respectively connecting the 2nd-1 branch portion A2-1 of the 2nd-1 bus bar B2-1 and the 2-2 branch portion A2-2 of the 2nd-2 bus bar B2-2 may be disposed at the upper and lower positions in the second direction Z2 to avoid a short-circuit therebetween. In other words, the 2nd-1 branch portion A2-1 may also be referred to as 1^{st} second branch portion A2-1. Further, the 2nd-2 branch portion A2-2 may also be referred to as 2^{nd} second branch portion A1-2.

More specifically, the 2nd-1 bus bar B2-1 may include the 2nd-1 connection unit C2-1 extending in the first direction Z1 in which the battery cells 10 are arranged at the upper position and a pair of 2nd-1 branch portions A2-1 connected to the first and second electrode terminals E1 and E2 of battery cells 10 that extend from both ends of the 2nd-1 connection unit C2-1 toward the lower position in the second direction Z2 perpendicular to the first direction Z1 and are not adjacent to each other. Similarly, the 2nd-2 bus bar B2-2 may include the 2nd-2 connection unit C2-2 extending in the first direction Z1 in which the battery cells 10 are arranged at the lower position and a pair of 2nd-2 branch portions A2-2 connected to the first and second electrode terminals E1 and E2 of the battery cells 10 that extend from both ends of the 2nd-2 connection unit C2-2 toward the upper position in the second direction Z2 perpendicular to the first direction Z1 and are not adjacent to each other.

The third bus bar B3 may include a main body disposed on a rear side of the battery pack P and a pair of connection units bent from the main body toward the first and second side surfaces S1 and S2 of the battery cell 10. For example, the third bus bar B3 may be formed to surround a rear-end plate EP2 forming the rear side of the battery pack P and may extend to surround the rear-end plate EP2 by including the main body disposed on the rear side of the battery pack P and the pair of connection units bent from the main body toward the first and second side surfaces S1 and S2 of the battery cell 10. The third bus bar B3 may be disposed to surround a rear-end plate EP2 forming the rear side of the battery pack P at the upper position (e.g., the second level L2 from the bottom of the flat portions of the side plates SP, SP1, SP2). The third bus bar B3 may be electrically connected to the n-1^{th} battery cell 10 and the n^{th} battery cell 10 by disposing a rear connection bar RC between the n-1^{th} battery cell 10 and the n^{th} battery cell 10. The rear connection bar RC may include a first portion RC1 disposed at the same upper position as the third bus bar B3 (e.g., the second level L2 from the bottom of the flat portions of the side plates SP, SP1, and SP2) and a second portion RC2 forming a connection with the first and second electrode terminals E1 and E2 of the n-1^{th} battery cell 10 and the n^{th} battery cell 10 by extending from the first portion RC1. For example, the rear connection bar RC may include a first portion RC1 extending in the first direction Z1 and a second portion RC2 extending in the second direction Z2 to form a connection margin with the third bus bar B3 extending in the first direction Z1 and include the second portion RC2 extending in the second direction Z2 to form an electrical connection with the first and second electrode terminals E1 and E2 of the n-1^{th} battery cell 10 and the n^{th} battery cell 10. Throughout the description, the n^{th} battery cell 10 or the n-1^{th} battery cell 10 may refer to the physical numbering of the battery cells of the battery pack P when seen from the side, that is, from the third direction Z3. In other words, the electrical order of the cells from output terminal to output terminal may be different.

In embodiments of the present disclosure, the first and second terminal connection members P1 and P2 may include the first and second output terminals PE1 and PE2 disposed on a front-end plate EP1 forming the front of the battery pack P, and in embodiments of the present disclosure, the first and second terminal connection members P1 and P2 may include the other end that extends from one end of the first and second battery cells 10 side in the first direction Z1, is bent toward the front-end plate EP1 forming the front of the battery pack P, and forming the first and second output terminals PE1 and PE2 on the front-end plate EP1. In embodiments of the present disclosure, the first and second terminal connection members P1 and P2 may be electrically connected to the first and second battery cells 10 via a front connection bar FC. The front connection bar FC may include a first portion FC1 extending in the first direction Z1 at the upper position (e.g., the second level L2 from the bottom of the flat portions of the side plates SP, SP1, and SP2) and a second portion FC2 extending from the first portion FC1 in the second direction Z2 and connected to the first and second electrode terminals E1 and E2 of the first and second battery cells 10. The front connection bar FC may include the first portion FC1 extending in the first direction Z1 in which the first and second terminal connection members P1 and P2 extend to form a connection margin with the first and second terminal connection members P1 and P2 extending in the first direction Z1 and may include the second portion FC2 extending in the second direction Z2 to form an electrical connection to the first and second electrode terminals E1 and E2 of the first and second battery cells 10.

In embodiments of the present disclosure, the plurality of battery cells 10 forming the battery pack P may be electrically connected to each other through the first to third bus bars B1, B2, and B3, for example, the plurality of battery cells 10 may include serial connections of battery cells 10 arranged alternately with each other, and the plurality of battery cells 10 may be physically coupled through, as plates surrounding the plurality of battery cells 10 forming the battery pack P, the front-end plate EP1 and the rear-end plate EP2 disposed to face each other with the plurality of battery cells 10 therebetween in the first direction Z1 and a pair of side plates SP, SP1, and SP2 arranged to face each other by disposing the plurality of battery cells 10 therebetween in the third direction Z3. More specifically, in embodiments of the present disclosure, the front-end plate EP1 and the rear-end plate EP2 may be arranged at both sides of the battery cell 10 in the first direction Z1 corresponding to the arrangement direction of the plurality of battery cells 10, and a pair of side plates SP, SP1, and SP2 may be disposed on both sides of the battery cell 10 in the third direction Z3 that intersects the first direction Z1. The pair of side plates SP, SP1, and SP2 may cover the first and second side surfaces S1 and S2 of the plurality of battery cells 10 while extending across the first and second side surfaces S1 and S2 of the plurality of battery cells 10 in the first direction Z1, and first and second terminal holes EH1 and EH2 may be formed in the pair of side plates SP, SP1, and SP2 to expose the first and second electrode terminals E1 and E2 formed on the first and second side surfaces S1 and S2. The first and second electrode terminals E1 and E2 formed on the first and second side surfaces S1 and S2 of the battery cell 10 may be exposed to the outside of the side plates SP, SP1, and SP2 through the terminal holes EH1 and EH2 of the side plates SP, SP1, and SP2 and may be connected to the first and second bus bars B1 and B2 arranged on the side plates SP, SP1, and SP2, the front connection bar FC, and the rear connection bar RC. In other words, the first and second electrode terminals E1, E2 may at least partly extend into one of the terminal holes EH1 and EH2 of the side plates SP1, SP2. Further, the side surfaces S1, S2 of the battery cell may be in direct contact with one of the side plates SP1, SP2. For example, in embodiments of the present disclosure, the first and second terminal holes EH1 and EH2 formed in the side plates SP, SP1, and SP2 may be formed on substantially the same third level L3 (for example, the third level L3 from the bottom of the flat portions of the side plates SP, SP1, and SP2) in the second direction Z2. The third level L3 may be the middle of the battery cell 10 in the second direction Z2 or in the vicinity of said middle. The first level L1 may be lower than the third level L3 and the third level L3 may be lower than the second level L2.

In embodiments of the present disclosure, the first and second bus bars B1 and B2, the front connection bar FC, and the rear connection bar RC may be disposed on the side plates SP, SP1, and SP2, and may form an electrical connection with the first and second electrode terminals E1 and E2 that are disposed on an outer surface of the side plates SP, SP1, and SP2 and exposed to the outside of the side plates SP, SP1, and SP2 through the first and second terminal holes EH1 and EH2 formed in the side plates SP, SP1, and SP2. In embodiments of the present disclosure, the first and second electrode terminals E1 and E2 may be formed to protrude in the third direction on the first and second side surfaces S1 and S2 of the battery and form an electrical connection with the front connection bar FC and the rear connection bar RC disposed on the side plates SP, SP1, and SP2 and the first and second bus bars B1 and B2 through the first and second terminal holes EH1 and EH2 formed in the side plates SP, SP1, and SP2 covering the first and second side surfaces S1 and S2 of the battery cell 10. For example, in embodiments of the present disclosure, on the first and second side surfaces S1 and S2 of the battery cell 10, the first and second electrode terminals E1 and E2 may be formed to protrude from a central position of the first and second side surfaces S1 and S2, and the first and second electrode terminals E1 and E2 may be formed with a step difference in the third direction Z3 from edges of the first and second side surfaces S1 and S2.

In embodiments of the present disclosure, the first and second battery cells 10 formed at the front position among the plurality of battery cells 10 may be connected to the first and second terminal connection members P1 and P2 via the front connection bar FC, and among the plurality of battery cells 10, the n-1^{th} battery cell 10 and the n^{th} battery cell 10 forming the rear position may be connected to the third bus bar B3 via the rear connection bar RC. At this time, the front connection bar FC and the rear connection bar RC may be directly connected to the first and second electrode terminals E1 and E2 of the battery cell 10, may be disposed at positions (positions directly connected to the first and second electrode terminals E1 and E2 exposed through the first and second terminal holes EH1 and EH2 formed in the side plates SP, SP1, and SP2) directly connected to the first and second electrode terminals E1 and E2 of the battery cell 10, and may be coupled, for example, by welding, etc. to the first and second electrode terminals E1 and E2 of the each battery cell 10 to form connection points with the first and second electrode terminals E1 and E2 of each battery cell 10. In addition, the first and second terminal connection members P1 and P2 and the third bus bar B3 may be connected to the front connection bar FC and the rear connection bar RC, respectively. For example, in embodiments of the present disclosure, the front connection bar FC and the rear connection bar RC, and the first and second bus bars B1 and B2 may be coupled by welding, etc. to the first and second electrode terminals E1 and E2 exposed from the first and second terminal holes EH1 and EH2 of the side plates SP, SP1, and SP2 covering the first and second side surfaces S1 and S2 of the battery cell 10, and the third bus bar B3 and the first and second terminal connection members P1 and P2 may be connected by adding on the front connection bar FC and the rear connection bar RC that are coupled by welding, etc. to the first and second electrode terminals E1 and E2 of the battery cell 10.

In embodiments of the present disclosure, while uniformly applying a connection process, such as welding, etc. for connecting the first and second electrode terminals E1 and E2 and the first and second bus bars B1 and B2 to the front connection bar FC and the rear connection bar RC, a connection process of connecting the first and second electrode terminals E1 and E2 of each battery cell 10 to the front connection bar FC and the rear connection bar RC may be performed as a single process and after the connection process with the first and second electrode terminals E1 and E2 of the battery cell 10, a connection process for connecting the first and second terminal connection members P1 and P2 to the third bus bar B3 may be performed. In this way, according to embodiments of the present disclosure, as the connection process of the first and second electrode terminals E1 and E2 of the battery cell 10 to the front connection bar FC and the rear connection bar RC is uniformly performed, the yield of the product may be improved, and a battery pack P that is advantageous for an automation process may be provided.

In embodiments of the present disclosure, among the first and second bus bars B1 and B2, the 1st-1 bus bar B1-1 formed at a relatively upper position (for example, the second level L2 from the bottom of the flat portion of the side plates SP, SP1, and SP2) and the 1st-1 connection unit C1-1 and the 2nd-1 connection unit C2-1 of the 2nd-1 bus bar B2-1 may be formed at the relatively upper position in the second direction Z2, and, among the front connection bar FC and the rear connection bar RC, first portions FC1 and RC1 disposed at the relatively upper position (for example, the second level L2 from the bottom of the flat portion of the side plates SP, SP1, and SP2) may be disposed at the same level as the 1st-1 bus bar B1-1 and the 1st-1 connection unit C1-1 and the 2nd-1 connection unit C2-1 of the 2nd-1 bus bar B2-1, that is, at an upper position of the same level in the second direction Z2, and thus a battery pack P that is advantageous for positional alignment or automation process may be provided. For example, in embodiments of the present disclosure, by disposing the 1st-1 bus bar B1-1 and the 1st-1 connection unit C1-1 and the 2nd-1 connection unit C2-1 of the 2nd-1 bus bar B2-1 that are formed on the first and second side surfaces S1 and S2 of the battery cell 10 at the same upper position (for example, the second level L2 from the bottom of the flat portion of the side plates SP, SP1, and SP2) and together, by disposing the first portions FC1 and RC1 of the front connection bar FC and the rear connection bar RC at the same upper position (for example, the second level L2 from the bottom of the flat portion of the side plates SP, SP1, and SP2), the positional alignment of the plurality of electrical connections forming the battery pack P may be easily achieved and, for example, short circuits due to positional misalignment may be avoided.

In embodiments of the present disclosure, among the first and second bus bars B1 and B2, the 1st-2 bus bar B1-2 formed at a lower position (for example, the first level L1 from the bottom of the flat portion of the side plates SP, SP1, and SP1) and the 1st-2 connection unit C1-2 and the 2nd-2 connection unit C2-2 of the 2nd-2 bus bar B2-2 may be formed at a relatively lower position in the second direction Z2, and by disposing the 1st-2 bus bar B1-2 and the 1st-2 connection unit C1-2 and the 2nd-2 connection unit C2-2 of the 1st-2 bus bar B1-2 at the same lower level (for example, the first level L1 from the bottom of the flat portion of the side plates SP, SP1, and SP1), for example, by disposing the 1st-2 bus bar B1-2 and the 1st-2 connection unit C1-2 and the 2nd-2 connection unit C2-2 of the 2nd-2 bus bar B2-2 that are disposed on the first and second side surfaces S1 and S2 of the battery cell 10 at the same lower level, the positional alignment between the electrical connections forming the battery pack P may be easily achieved, and short circuit due to positional misalignment is avoided. In embodiments of the present disclosure, the first and second terminal connection members P1 and P2 extending in the first direction Z1 to form connections with the first portions FC1 and RC1 along the first portions FC1 and RC1 of the front connection bar FC and the rear connection bar RC disposed at the upper position (for example, the second level L2 from the bottom of the flat portion of the side plates SP, SP1, and SP2) equal to the level of the 1st-1 connection unit C1-1 of the 1st-1 bus bar B1-1 and the 2nd-1 connection unit C2-1 of the 2nd-1 bus bar B2-1 and the third bus bar B3 may also be positioned at the same level (for example, the second level L2 from the bottom of the flat portion of the side plates SP, SP1, and SP2) as the upper position.

In embodiments of the present disclosure, a cover piece CV may be formed to close a portion of the first and second terminal holes EH1 and EH2 (for example a lower portion of the first and second terminal holes EH1 and EH2) in the first and second terminal holes EH1 and EH2 formed in the side plates SP, SP1, and SP2. For example, the plurality of first bus bars B1 disposed on the first side surface S1 of the battery cell 10 may electrically connect pairs of battery cells 10 that are matched to be staggered with each other and may extend across the battery cell 10 disposed between the connection target pair of battery cells 10, for example, to avoid an electrical connection with the interposed battery cell 10 while extending across the battery cell interposed between the pair of battery cells 10, may block erroneous connection with the battery cell 10 interposed therebetween through the cover piece CV covering a portion of the first and second terminal holes EH1 and EH2 that expose the first and second electrode terminals E1 and E2 of the battery cell 10 interposed therebetween, for example, covering a lower portion of the first and second terminal holes EH1 and EH2.

For example, in embodiments of the present disclosure, the first and second terminal holes EH1 and EH2 formed in the side plates SP, SP1, and SP2 may be formed in a position biased toward the lower position rather than the upper position on which relatively many electrical connections are arranged, such as the 1st-1 connection unit C1-1 of the 1st-1 bus bar B1-1 and the 2nd-1 connection unit C2-1 of the 2nd-1 bus bar B2-1 disposed at the same upper position level (for example, the second level L2 from the bottom of the flat portion of the side plates SP, SP1, and SP2) and the first portions FC1 and RC1 of the front connection bar FC and the rear connection bar RC, for example, the first and second terminal holes EH1 and EH2 of the side plates SP, SP1, and SP2 may be formed at a position biased toward the lower position where relatively few electrical connections are formed, such as the 1st-2 connection unit C1-2 of the 1st-2 bus bar B1-2 and the 2nd-2 connection unit C2-2 of the 2nd-2 bus bar B2-2, and accordingly, the cover piece CV may be formed at the lower portion of the first and second terminal holes EH1 and EH2 where the 1st-2 connection unit C1-2 of the 1st-2 bus bar B1-2 and the 2nd-2 connection unit C2-2 of the 2nd-2 bus bar B2-2 extend across to avoid erroneous connection therebetween.

In embodiments of the present disclosure, with respect to the arrangement of the first and second bus bars B1 and B2, the front connection bar FC, and the rear connection bar RC, the upper position and the lower position in the second direction Z2 refer to the first and second levels L1 and L2 from the bottom of the relatively flat portion for arranging components involved in the electrical connection of the battery cell 10 among the side plates SP, SP1, and SP2, and as described above, the description that the first and second terminal holes EH1 and EH2 formed in the side plates SP, SP1, and SP2 are formed at the positions biased toward the lower position rather than the upper position may refer, rather than referring to the upper and lower positions among all side plates SP, SP1, and SP2, among all side plates SP, SP1, and SP2, to the upper and lower positions among the flat portions of the side plates SP, SP1, and SP2 where components involved in the electrical connection of the battery cell 10 are placed.

In embodiments of the present disclosure, the first bus bar B1 disposed on the first side surface S1 of the battery cell 10 may include the 1st-1 bus bar B1-1 including the 1st-1 connection unit C1-1 at the upper position and the 1st-2 bus bar B1-2 including the 1st-2 connection unit C1-2 at the lower position, and the 1st-1 connection unit C1-1 may extend to detour the top of the first terminal hole EH1 and may be formed flat on the side plates SP, SP1, and SP2. In contrast, the 1st-2 connection unit C1-2 may include a step difference unit ST2 stepped in a direction away from the side plates SP, SP1, and SP2 to accommodate a protrusion of the cover piece CV for closing a portion of the first terminal hole EH1.

In embodiments of the present disclosure, the 1st-1 bus bar B1-1 and the 1st-2 bus bar B1-2 may be formed on different support bases, for example, the 1st-1 bus bar B1-1 may include a pair of step difference units ST1 stepped toward the first and second electrode terminals E1 and E2 from the 1st-1 connection unit C1-1 by using the 1st-1 connection unit C1-1 on the side plates SP, SP1, and SP2 as a support base, and the 1st-2 bus bar B1-2 may include the step difference unit ST2 formed on the 1st-2 connection unit C1-2 connecting the 1st-2 branch portion A1-2 by using the 1st-2 branch portion A1-2 disposed on the first and second electrode terminals E1 and E2 exposed through the first and second terminal holes EH1 and EH2 of the side plates SP, SP1, and SP2.

Similarly, in embodiments of the present disclosure, the second bus bar B2 disposed on the second side surface S2 of the battery cell 10 may include the 2nd-1 bus bar B2-1 including the 2nd-1 connection unit C2-1 and the 2nd-2 bus bar B2-2 including the 2nd-2 connection unit C2-2, and the 2nd-1 connection unit C2-1 may extend to detour the top of the first and second terminal holes EH1 and EH2 and may be formed flat on the side plates SP, SP1, and SP2. In contrast, the 2nd-2 connection unit C2-2 may include the step difference unit ST2 stepped in a direction away from the side plates SP, SP1, and SP2 to accommodate a protrusion of the cover piece CV for closing a portion of the second terminal hole EH2. For example, the 2nd-1 bus bar B2-1 and the 2nd-2 bus bar B2-2 may be formed on different support bases, for example, the 2nd-1 bus bar B2-1 may include a pair of step difference units ST1 stepped toward the first and second electrode terminals E1 and E2 from the 2nd-1 connection unit C2-1 by using the 2nd-1 connection unit C2-1 on the side plates SP, SP1, and SP2 as a support base, and the 2nd-2 bus bar B2-2 may include the step difference unit ST2 formed on the 2nd-2 connection unit C2-2 connecting the 1st-2 branch portion A1-2 by using the 1st-2 branch portion A1-2 disposed on the first and second electrode terminals E1 and E2 exposed through the first and second terminal holes EH1 and EH2 of the side plates SP, SP1, and SP2.

In other words, in embodiments of the present disclosure, the 1st-1 bus bar B1-1 or the 2nd-1 bus bar B2-1 may include the 1st-1 connection unit C1-1 or the 2nd-1 connection unit C2-1 disposed on the side plates SP, SP1, and SP2 and a pair of the 1st-1 branch portion A1-1 or a pair of the 2-1 branch portion A2-1 that is extended from the 1st-1 connection unit C1-1 or the 2nd-1 connection unit C2-1, is connected to the first and second electrode terminals E1 and E2 exposed to the outside of the side plates SP, SP1, and SP2 through the first and second terminal holes EH1 and EH2 of the side plates SP, SP1, and SP2, and is formed stepwise towards the outside through a bending unit from the 1st-1 connection unit C1-1 or the 2nd-1 connection unit C2-1.

The 1st-2 bus bar B1-2 or the 2nd-2 bus bar B2-2 may include a pair of 1st-2 branch portions A1-2 or a pair of 2nd-2 branch portions A2-2 connected to the first and second electrode terminals E1 and E2 exposed to the outside of the side plates SP, SP1, and SP2 through the first and second terminal holes EH1 and EH2 of the side plates SP, SP1, and SP2 and the 1st-2 connection unit C1-2 or a 2nd-2 connection portion C2-2 connecting the pair of the 1st-2 branch portions A1-2 or the pair of the 2nd-2 branch portions A2-2 to each other and formed to be stepped outward from the pair of 1st-2 branch portions A1-2 or the pair of 2nd-2 branch portions A2-2 through the step difference unit ST2 to accommodate the cover piece CV.

In embodiments of the present disclosure, the plurality of battery cells 10 may be arranged so that the main surfaces M face each other in the first direction Z1 corresponding to the arrangement direction of the battery cells 10, and the upper surface U and lower surface L connecting the main surfaces M facing each other and the first and second side surfaces S1 and S2 may form the long side and the short side relatively extending lengthwise of the battery cell 10, respectively. In embodiments of the present disclosure, the upper cooling plate 51 and the lower cooling plate 52 extending across the upper surface U may be provided on the upper surface U and the lower surface L forming the long side relatively extending lengthwise.

In embodiments of the present disclosure, by arranging the upper cooling plate 51 and the lower cooling plate 52, respectively, on the upper surface U and lower surface L of the battery cell 10 forming the long side that extends relatively lengthwise in the second direction Z2 crossing the first direction Z1 corresponding to the arrangement direction of the battery cells 10, a relatively large cooling area may be secured through the upper cooling plate 51 and lower cooling plate 52 disposed on the upper surface U and lower surface L relatively extending lengthwise while avoiding physical and electrical interferences with the electrical connections formed through the first and second side surfaces S1 and S2 arranged to face each other in the third direction Z3 crossing the first direction Z1. For example, in embodiments of the present disclosure, by arranging a battery pack P including a plurality of battery cells 10 or a plurality of battery packs P using the first and second sides S1 and S2 of the battery cell 10, which form a short side extending relatively short, as a height dimension, or a power supply device including the battery pack P may be provided. For example, the battery pack P with a reduced height may be provided as a power supply device of an electric vehicle, wherein the small height is advantageous for slimming, for example, so as not to affect the height of the electric vehicle due to the height of the battery pack P located at a lower side of the vehicle.

In embodiments of the present disclosure, by considering the arrangement of the plurality of battery cells 10 arranged with the main surfaces M facing each other in the first direction Z1 in which the plurality of battery cells 10 are arranged and by arranging the plurality of battery cells 10 using the first and second side surfaces S1 and S2 as height dimensions that are disposed to face each other in the second direction Z2, the battery pack P that is advantageous for relatively slimming may be provided. In other words, the height of the battery pack may be selected by the dimension of the side surface S1, S2 of the battery cell 10 in the second direction Z2. Also, by connecting the pairs of the main surfaces M facing each other in the first direction Z1 and form the short side extending relatively short, and by forming electrical connection of the battery cells 10 through the first and second side surfaces S1 and S2, the arrangement of electrical components may be removed or minimized from the upper surface U and lower surface L of the battery cell 10, and thus, the battery pack P that is advantageous for slimming may be provided, and at the same time, the battery pack P that may increase the cooling area by arranging the upper cooling plate 51 and the lower cooling plate 52 on the upper surface U and the lower surface L forming the relatively long side, respectively. In other words, the height of the side surfaces S1, S2 of the battery cell 10 in the second direction Z2 may be selected such that interconnects, like busbars and/or terminals, can be arranged on the side surfaces S1, S2.

According to embodiments of the present disclosure, output terminals of different polarities are formed adjacent to each other to facilitate electrical connection with set devices, the electrical path of the output terminal is shortened to improve electrical output, while improving space utilization through a simplified structure and providing robustness against external vibration and shock, the bus bars for electrical connection between the cooling plates for cooling the battery cells and the battery cells arranged on the long side and short side of the battery cells facing each other in a direction crossing each other, and thus, physical and electrical interference between the cooling of the battery cells and the electrical connection of the battery cells may be eliminated, the cooling area may be increased by arranging the cooling plates on the upper and lower surfaces that form a relatively long side extending lengthwise, and by forming electrical connections on the first and second side surfaces forming the short side extending relatively short, it is possible to provide a battery pack that is advantageous for slimming without affecting the short side forming the height dimension.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims.

## Claims

1. A battery pack (P) comprising:
a plurality of battery cells (10) arranged back and forth in a first direction, each having a pair of main surfaces (M) arranged to face each other in a first direction and including upper and lower surfaces (U, L) forming a pair of long sides facing each other, and first and second side surfaces (S1, S2) forming a pair of short sides facing each other, a pair of the upper and lower surfaces (U, L) and a pair of the first and second side surfaces (S1, S2) connecting the pair of main surfaces (M) to each other, respectively;
first and second bus bars (B1, B2) electrically connecting the plurality of battery cells (10) to each other, and electrically connecting the battery cells (10) alternately arranged so as not to be adjacent to each other in the first direction on the first and second side surfaces (S1, S2), respectively; **characterised by**
first and second output terminals (PE1, PE2) formed together on a front side of the plurality of battery cells (10) in the first direction and a third bus bar (B3) that electrically connects adjacent battery cells (10) to each other by detouring a rear side of the plurality of the battery cells (10).

2. The battery pack (P) as claimed in claim 1, wherein the first and second output terminals (PE1, PE2) are drawn from first and second battery cells arranged adjacent to each other at a front position from among the plurality of battery cells (10), and
the third bus bar (B3) connects an n-1^{th} battery cell and an n^{th} battery cell, with n>1, n being an integer, disposed adjacent to each other at a rear position from among the plurality of battery cells (10).

3. The battery pack (P) as claimed in claim 1 or 2, further comprising an upper cooling plate (51) and a lower cooling plate (52) respectively disposed on the upper and lower surfaces (U, L) forming the long side of the battery cell (10).

4. The battery pack (P) as claimed in any one of claims 1 to 3, wherein the upper and lower surfaces (U, L) of the battery cells (10) face each other in an up-down direction, in a second direction intersecting the first direction, and
the first and second side surfaces (S1, S2) of the battery cell (10) face each other in a third direction that intersects the first and second directions.

5. The battery pack (P) as claimed in any one of claims 1 to 4, wherein the first bus bar (B1) or the second bus bar (B2) comprises a plurality of first bus bars (B1-1, B1-2) or second bus bars (B2-1, B2-2) that electrically connect non-adjacent battery cells to each other on the first or second side surfaces (S1, S2) of the battery cell,
wherein the plurality of first bus bars (B1-1, B1-2) or second bus bars (B2-1, B2-2) comprise:
a 1st-1 bus bar (B1-1) or a 2nd-1 bus bar (B1-2) that connects non-adjacent battery cells (10) to each other while bypassing an upper position relatively adjacent to the upper surface (U) so as not to cause a short-circuit to each other; and
a 1st-2 bus bar (B2-1) or a 2nd-2 bus bar (B2-2) that connects non-adjacent battery cells (10) to each other while bypassing a lower position relatively adjacent to the lower surface (L) so as not to cause a short-circuit to each other.

6. The battery pack as claimed in claim 5, wherein the 1st-1 bus bar (B1-1) and the 1st-2 bus (B1-2) bar are arranged to engage in a comb shape so as to interlock with each other on the first side surface (S1) of the battery cell (10) and connect different pairs of battery cells (10) that are matched not to be adjacent to each other without short circuiting by detouring the upper position and the lower position, respectively, and
the 2nd-1 bus bar (B2-1) and the 2nd-2 bus bar (B2-2) are arranged to engage in a comb shape so as to interlock with each other on the second side surface (S2) of the battery cell (10) and connect different pairs of battery cells (10) that are matched not to be adjacent to each other without short circuiting by detouring the upper position and the lower position, respectively, or
wherein the 1st-1 bus bar (B1-1) comprises a 1st-1 connection unit (C1-1) extending in the first direction at the upper position and a pair of 1st-1 branch portions (A1-1) extending from both ends of the 1st-1 connection unit (C1-1) toward the lower position and connected to the electrode terminals (E1, E2) of the battery cells (10) that are not adjacent to each other, and
the 1st-2 bus bar (B1-2) comprises a 1st-2 connection unit (C1-2) extending in the first direction at the lower position and a pair of 1st-2 branch portions (A1-2) extending from both ends of the 1st-2 connection unit (C1-2) toward the upper position and connected to the electrode terminals (E1, E2) of the battery cells (10) that are not adjacent to each other

7. The battery pack (P) as claimed in one of claims 5 or 6, wherein the 2nd-1 bus bar (B2-1) comprises a 2nd-1 connection unit (C2-1) extending along a first direction at an upper position, and a pair of 2nd-1 branch portion (A2-1) extending from both ends of the 2nd-1 connection (C2-1) unit toward the lower position and connected to the electrode terminals (E1, E2) of the battery cells (10) that are not adjacent to each other, and
the 2nd-2 bus bar (B2-2) comprises a 2nd-2 connection unit (C2-2) extending in the first direction at the lower position, and a pair of 2nd-2 branch portion (A2-2) extending from both ends of the 2nd-2 connection unit (C2-2) toward the upper position and connected to the electrode terminals (E1, E2) of the battery cells (10) that are not adjacent to each other.

8. The battery pack as claimed in any one of claims 1 to 7, wherein the third bus bar (B3)
- extends to surround a rear-end plate (EP2) disposed at the rear position of the plurality of battery cells (10) and is bent on the opposite first and second side surfaces (S1, S2) of the n-1^{th} battery cell and the n^{th} battery cell adjacent to each other at the rear position, and/or
- connects the n-1^{th} battery cell and the n^{th} battery cell arranged adjacent to each other at the rear position via a rear connection bar (RC).

9. The battery pack as claimed in claim 8, 2^{nd} alternative, wherein the rear connection bar (RC) comprises:
a first portion (RC1) extending in the first direction in which the third bus bar (B3) extends at the upper position on the first and second side surfaces (S1, S2) of the n-1^{th} battery cell and the n^{th} battery cell; and
a second portion (RC2) extending from the first portion (RC1) toward the lower position and connected to electrode terminals (E1, E2) of the n-1^{th} battery cell and the n^{th} battery cell.

10. The battery pack (P) as claimed in any one of claims 1 to 9, further comprising first and second terminal connection members (P1, P2) each including other ends forming the first and second output terminals (PE1, PE2) at a front-end plate (EP1) disposed at the front position of the plurality of battery cells (10), while extending in the first direction from one end connected to the electrode terminal (E1, E2) of the first and second battery cells (10) arranged adjacent to each other at the front position among the plurality of battery cells (10)

11. The battery pack as claimed in claim 10, wherein the first and second terminal connection members (P1, P2) are connected to the first and second battery cells (10) arranged adjacent to each other in the front position via a front connection bar (FC)

12. The battery pack as claimed in claim 11, wherein the front connection bar (FC) comprises:
a first portion (FC1) extending in the first direction in which the first and second terminal connection members (P1, P2) extend at upper positions on first and second side surfaces (S1, S2) of the first and second battery cells (10); and
a second portion (FC2) extending from the first portion (FC1) toward the lower position and connected to the electrode terminals (E1, E2) of the first and second battery cells (10).

13. The battery pack (P) as claimed in any one of claims 5 to 12, wherein a connection portion of the 1st-1 bus bar (B1-1) and a connection portion of the 2nd-1 bus bar (B2-1) extending across the upper position among the first and second bus bars, a first portion (RC1) of the rear connection bar (RC) connected to the third bus bar (B3), and a first portion of the first and second terminal connection members (P1, P2) including the first and second output terminals (PE1, PE2) are disposed at the upper position of the same second level in the second direction corresponding to the up-down direction.

14. The battery pack (P) as claimed in any one of claims 5 to 13, wherein a connection portion of the 1st-2 bus bar (B1-2) and the connection portion of the 2nd-2 bus bar (B2-2) extending across the lower position among the first and second bus bars (B1, B2) are disposed at the lower position of the same first level in the second direction corresponding to the up-down direction.

15. The battery pack (P) as claimed in any one of claims 1 to 14, wherein the first and second bus bars (B1, B2) are disposed on a pair of side plates (SP1, SP2) extending across the first and second side surfaces (S1, S2) to cover the first and second side surfaces (S1, S2) of the plurality of battery cells (10) and are electrically connected to the electrode terminals (E1, E2) exposed through first and second terminal holes (EH1, EH2) formed in the side plate (SP1, SP2).

16. The battery pack (P) as claimed in claim 15, further comprising cover pieces (CV) in the first and second terminal holes (EH1, EH2) to close a portion of the first and second terminal holes (EH1, EH2).

17. The battery pack (P) as claimed in claim 16, wherein the cover pieces (CV) block the first bus bar or the second bus bar electrically connecting a pair of battery cells that are alternately matched to each other on the first or second side surface (S1, S2) of the battery cell (10) from being erroneously connected to a battery cell (10) interposed between a pair of the battery cells (10) to be connected to each other as connection target.

18. The battery pack (P) as claimed in claim 16 or 17, wherein the connection portion of the 1st-1 bus bar (B1-1) and the connection portion of the 2nd-1 bus bar (B2-1) extending across the upper position among the first and second bus bars (B1, B2), a first portion (RC1) of the rear connection bar (RC) connected to the third bus bar (B3), and the first portion of the first and second terminal connection members (P1, P2) including the first and second output terminals (PE1, PE2) are disposed at a relatively upper position,
the connection portion of the 1st-2 bus bar (B1-2) and the connection portion of the 2nd-2 bus bar (B2-2) extending across the lower position among the first and second bus bars (B1, B2) are disposed at a relatively lower position in the second direction, and
the cover piece (CV) is formed on a lower portion of the first and second terminal holes (EH1, EH2) extending across the connection portion of the 1st-2 bus bar (B1-2) or the connection portion of the 2nd-2 bus bar (B2-2).

19. The battery pack as claimed in any one of claims 16 to 18, wherein the 1st-1 bus bar (B1-1) or the 2nd-1 bus bar (B2-1) comprises the 1st-1 connection unit (C1-1) or the 2nd-1 connection (C2-1) unit disposed on the side plate (SP1, SP2) and a pair of 1st-1 branch portions (A1-1) or a pair of 2nd-1 branch portions (A2-1) that are connected to the electrode terminal (E1, E2) extended from the 1st-1 connection unit (C1-1) or the 2nd-1 connection unit (C2-1) and exposed to the outside of the side plate (SP1, SP2) through the first and second terminal holes (EH1, EH2) of the side plate (SP1, SP2) and are formed to be stepwise outward from the 1st-1 connection unit (C1-1) or the 2nd-1 connection unit (C2-1), and
the 1st-2 bus bar (B1-2) or the 2nd-2 bus bar (B2-2) comprises a pair of 1st-2 branch portions (A1-2) or a pair of 2nd-2 branch portions (A2-2) connected to the electrode terminal (E1, E2) exposed to the outside of the side plate (SP1, SP2) through the first and second terminal holes (EH1, EH2) of the side plate (SP1, SP2), and the 1st-2 connection unit (C1-2) or the 2nd-2 connection unit (C2-2) that connect the pair of 1st-2 branch portions (A1-2) or the pair of 2nd-2 branch portions (A2-2) to each other and formed to be stepwise outward from the pair of 1st-2 branch portions (A1-2) or the pair of 2nd-2 branch portions (A2-2) to accommodate the cover piece (CV).

## Patentansprüche

1. Batteriepack (P), umfassend:
eine Vielzahl von Batteriezellen (10), die in einer ersten Richtung hintereinander angeordnet sind, wobei jede Batteriezelle ein Paar Hauptflächen (M) aufweist, die einander in der ersten Richtung gegenüberliegend angeordnet sind, sowie obere und untere Flächen (U, L), die ein Paar einander gegenüberliegender langer Seiten bilden, und erste und zweite Seitenflächen (S1, S2), die ein Paar einander gegenüberliegender kurzer Seiten bilden, umfassen, wobei ein Paar der oberen und unteren Flächen (U, L) und ein Paar der ersten und zweiten Seitenflächen (S1, S2) jeweils das Paar von Hauptflächen (M) miteinander verbinden; erste und zweite Stromschienen (B1, B2), die die Vielzahl von Batteriezellen (10) elektrisch miteinander verbinden, und die Batteriezellen (10), die abwechselnd angeordnet sind, so dass sie in der ersten Richtung nicht benachbart zueinander sind, jeweils auf den ersten und zweiten Seitenflächen (S1, S2) elektrisch verbinden; **gekennzeichnet durch**
erste und zweite Ausgangsklemmen (PE1, PE2), die gemeinsam auf einer Vorderseite der Vielzahl von Batteriezellen (10) in der ersten Richtung ausgebildet sind, und eine dritte Stromschiene (B3), die benachbarte Batteriezellen (10) elektrisch miteinander verbindet, indem sie eine Rückseite der Vielzahl der Batteriezellen (10) umleitet.

2. Batteriepack (P) nach Anspruch 1, wobei die ersten und zweiten Ausgangsklemmen (PE1, PE2) von ersten und zweiten Batteriezellen abgezogen sind, die aus der Vielzahl von Batteriezellen (10) benachbart zueinander an einer vorderen Position angeordnet sind, und
die dritte Stromschiene (B3) eine n-1-te Batteriezelle und eine n-te Batteriezelle mit n>1 verbindet, wobei n eine ganze Zahl ist, die aus der Vielzahl von Batteriezellen (10) benachbart zueinander an einer hinteren Position angeordnet sind.

3. Batteriepack (P) nach Anspruch 1 oder 2, ferner umfassend eine obere Kühlplatte (51) und eine untere Kühlplatte (52), die jeweils auf den oberen und unteren Oberflächen (U, L) angeordnet sind, die die lange Seite der Batteriezelle (10) bilden.

4. Batteriepack (P) nach einem der Ansprüche 1 bis 3, wobei die oberen und unteren Oberflächen (U, L) der Batteriezellen (10) einander in einer Auf-Ab-Richtung, in einer zweiten Richtung, die die erste Richtung schneidet, gegenüberliegen, und
die ersten und zweiten Seitenflächen (S1, S2) der Batteriezelle (10) einander in einer dritten Richtung gegenüberliegen, die die erste und zweite Richtung schneidet.

5. Batteriepack (P) nach einem der Ansprüche 1 bis 4, wobei die erste Stromschiene (B1) oder die zweite Stromschiene (B2) eine Vielzahl erster Stromschienen (B1-1, B1-2) oder zweiter Stromschienen (B2-1, B2-2) umfasst, die nicht-benachbarte Batteriezellen auf den ersten oder zweiten Seitenflächen (S1, S2) der Batteriezelle elektrisch miteinander verbinden,
wobei die Vielzahl erster Stromschienen (B1-1, B1-2) oder zweiter Stromschienen (B2-1, B2-2) umfasst:
eine 1.-1 Stromschiene (B1-1) oder eine 2.-1 Stromschiene (B2-1), die nicht-benachbarte Batteriezellen (10) miteinander verbindet, während sie eine obere Position relativ benachbart zur oberen Oberfläche (U) umgeht, um keine Kurzschlüsse miteinander zu verursachen; und
eine 1.-2 Stromschiene (B1-2) oder eine 2.-2 Stromschiene (B2-2), die nicht-benachbarte Batteriezellen (10) miteinander verbindet, während sie eine untere Position relativ benachbart zur unteren Oberfläche (L) umgeht, um keine Kurzschlüsse miteinander zu verursachen.

6. Batteriepack nach Anspruch 5, wobei die 1.-1 Stromschiene (B1-1) und die 1.-2 Stromschiene (B1-2) so angeordnet sind, dass sie kammartig ineinandergreifen, um auf der ersten Seitenfläche (S1) der Batteriezelle (10) miteinander zu verzahnen und verschiedene Paare von Batteriezellen (10) zu verbinden, die so abgestimmt sind, dass sie nicht benachbart zueinander sind, ohne Kurzschluss durch jeweiliges Umleiten der oberen Position und der unteren Position, und
die 2.-1 Stromschiene (B2-1) und die 2.-2 Stromschiene (B2-2) so angeordnet sind, dass sie kammartig ineinandergreifen, um auf der zweiten Seitenfläche (S2) der Batteriezelle (10) miteinander zu verzahnen und verschiedene Paare von Batteriezellen (10) zu verbinden, die so abgestimmt sind, dass sie nicht benachbart zueinander sind, ohne Kurzschluss durch jeweiliges Umleiten der oberen Position und der unteren Position, oder
wobei die 1.-1 Stromschiene (B1-1) eine 1.-1 Verbindungseinheit (C1-1), die sich in der ersten Richtung an der oberen Position erstreckt, und ein Paar 1.-1 Verzweigungsabschnitte (A1-1), die sich von beiden Enden der 1.-1 Verbindungseinheit (C1-1) in Richtung der unteren Position erstrecken und mit den Elektrodenanschlüssen (E1, E2) der Batteriezellen (10) verbunden sind, die nicht benachbart zueinander sind, umfasst, und
die 1.-2 Stromschiene (B1-2) eine 1.-2 Verbindungseinheit (C1-2), die sich in der ersten Richtung an der unteren Position erstreckt, und ein Paar 1.-2 Verzweigungsabschnitte (A1-2), die sich von beiden Enden der 1.-2 Verbindungseinheit (C1-2) in Richtung der oberen Position erstrecken und mit den Elektrodenanschlüssen (E1, E2) der Batteriezellen (10) verbunden sind, die nicht benachbart zueinander sind, umfasst.

7. Batteriepack (P) nach einem der Ansprüche 5 oder 6, wobei die 2.-1 Stromschiene (B2-1) eine 2.-1 Verbindungseinheit (C2-1), die sich entlang einer ersten Richtung an einer oberen Position erstreckt, und ein Paar 2.-1 Verzweigungsabschnitte (A2-1), die sich von beiden Enden der 2.-1 Verbindungseinheit (C2-1) in Richtung der unteren Position erstrecken und mit den Elektrodenanschlüssen (E1, E2) der Batteriezellen (10) verbunden sind, die nicht benachbart zueinander sind, umfasst, und
die 2.-2 Stromschiene (B2-2) eine 2.-2 Verbindungseinheit (C2-2), die sich in der ersten Richtung an der unteren Position erstreckt, und ein Paar 2.-2 Verzweigungsabschnitte (A2-2), die sich von beiden Enden der 2.-2 Verbindungseinheit (C2-2) in Richtung der oberen Position erstrecken und mit den Elektrodenanschlüssen (E1, E2) der Batteriezellen (10) verbunden sind, die nicht benachbart zueinander sind, umfasst.

8. Batteriepack nach einem der Ansprüche 1 bis 7, wobei die dritte Stromschiene (B3)
- sich so erstreckt, dass sie eine hintere Endplatte (EP2) umgibt, die an der hinteren Position der Vielzahl von Batteriezellen (10) angeordnet ist, und auf den entgegengesetzten ersten und zweiten Seitenflächen (S1, S2) der n-1-ten Batteriezelle und der n-ten Batteriezelle, die benachbart zueinander an der hinteren Position sind, gebogen ist, und/oder
- die n-1-te Batteriezelle und die n-te Batteriezelle, die benachbart zueinander an der hinteren Position angeordnet sind, über eine hintere Verbindungsschiene (RC) verbindet.

9. Batteriepack nach Anspruch 8, 2. Alternative, wobei die hintere Verbindungsschiene (RC) umfasst:
einen ersten Abschnitt (RC1), der sich in der ersten Richtung erstreckt, in der sich die dritte Stromschiene (B3) an der oberen Position auf den ersten und zweiten Seitenflächen (S1, S2) der n-1-ten Batteriezelle und der n-ten Batteriezelle erstreckt; und
einen zweiten Abschnitt (RC2), der sich von dem ersten Abschnitt (RC1) in Richtung der unteren Position erstreckt und mit Elektrodenanschlüssen (E1, E2) der n-1-ten Batteriezelle und der n-ten Batteriezelle verbunden ist.

10. Batteriepack (P) nach einem der Ansprüche 1 bis 9, ferner umfassend erste und zweite Klemmenverbindungsglieder (P1, P2), die jeweils andere Enden aufweisen, die die ersten und zweiten Ausgangsklemmen (PE1, PE2) an einer vorderen Endplatte (EP1) bilden, die an der vorderen Position der Vielzahl von Batteriezellen (10) angeordnet ist, während sie sich in der ersten Richtung von einem Ende erstrecken, das mit dem Elektrodenanschluss (E1, E2) der ersten und zweiten Batteriezellen (10) verbunden ist, die benachbart zueinander an der vorderen Position aus der Vielzahl von Batteriezellen (10) angeordnet sind.

11. Batteriepack nach Anspruch 10, wobei die ersten und zweiten Klemmenverbindungsglieder (P1, P2) mit den ersten und zweiten Batteriezellen (10), die benachbart zueinander an der vorderen Position angeordnet sind, über eine vordere Verbindungsschiene (FC) verbunden sind.

12. Batteriepack nach Anspruch 11, wobei die vordere Verbindungsschiene (FC) umfasst:
einen ersten Abschnitt (FC1), der sich in der ersten Richtung erstreckt, in der sich die ersten und zweiten Klemmenverbindungsglieder (P1, P2) an oberen Positionen auf ersten und zweiten Seitenflächen (S1, S2) der ersten und zweiten Batteriezellen (10) erstrecken; und
einen zweiten Abschnitt (FC2), der sich von dem ersten Abschnitt (FC1) in Richtung der unteren Position erstreckt und mit den Elektrodenanschlüssen (E1, E2) der ersten und zweiten Batteriezellen (10) verbunden ist.

13. Batteriepack (P) nach einem der Ansprüche 5 bis 12, wobei ein Verbindungsabschnitt der 1.-1 Stromschiene (B1-1) und ein Verbindungsabschnitt der 2.-1 Stromschiene (B2-1), die sich über die obere Position unter den ersten und zweiten Stromschienen erstrecken, ein erster Abschnitt (RC1) der hinteren Verbindungsschiene (RC), der mit der dritten Stromschiene (B3) verbunden ist, und ein erster Abschnitt der ersten und zweiten Klemmenverbindungsglieder (P1, P2), die die ersten und zweiten Ausgangsklemmen (PE1, PE2) umfassen, an der oberen Position des gleichen zweiten Niveaus in der zweiten Richtung, die der Auf-Ab-Richtung entspricht, angeordnet sind.

14. Batteriepack (P) nach einem der Ansprüche 5 bis 13, wobei ein Verbindungsabschnitt der 1.-2 Stromschiene (B1-2) und der Verbindungsabschnitt der 2.-2 Stromschiene (B2-2), die sich über die untere Position unter den ersten und zweiten Stromschienen (B1, B2) erstrecken, an der unteren Position des gleichen ersten Niveaus in der zweiten Richtung, die der Auf-Ab-Richtung entspricht, angeordnet sind.

15. Batteriepack (P) nach einem der Ansprüche 1 bis 14, wobei die ersten und zweiten Stromschienen (B1, B2) auf einem Paar Seitenplatten (SP1, SP2) angeordnet sind, die sich über die ersten und zweiten Seitenflächen (S1, S2) erstrecken, um die ersten und zweiten Seitenflächen (S1, S2) der Vielzahl von Batteriezellen (10) abzudecken, und elektrisch mit den Elektrodenanschlüssen (E1, E2) verbunden sind, die durch erste und zweite Anschlussöffnungen (EH1, EH2) freigelegt sind, die in der Seitenplatte (SP1, SP2) ausgebildet sind.

16. Batteriepack (P) nach Anspruch 15, ferner umfassend Abdeckstücke (CV) in den ersten und zweiten Anschlussöffnungen (EH1, EH2), um einen Teil der ersten und zweiten Anschlussöffnungen (EH1, EH2) zu schließen.

17. Batteriepack (P) nach Anspruch 16, wobei die Abdeckstücke (CV) verhindern, dass die erste Stromschiene oder die zweite Stromschiene, die ein Paar Batteriezellen elektrisch verbindet, die auf der ersten oder zweiten Seitenfläche (S1, S2) der Batteriezelle (10) abwechselnd aufeinander abgestimmt sind, fälschlicherweise mit einer Batteriezelle (10) verbunden wird, die zwischen einem Paar der miteinander zu verbindenden Batteriezellen (10) als Verbindungsziel eingeschoben ist.

18. Batteriepack (P) nach Anspruch 16 oder 17, wobei der Verbindungsabschnitt der 1.-1 Stromschiene (B1-1) und der Verbindungsabschnitt der 2.-1 Stromschiene (B2-1), die sich über die obere Position unter den ersten und zweiten Stromschienen (B1, B2) erstrecken, ein erster Abschnitt (RC1) der hinteren Verbindungsschiene (RC), der mit der dritten Stromschiene (B3) verbunden ist, und der erste Abschnitt der ersten und zweiten Klemmenverbindungsglieder (P1, P2), die die ersten und zweiten Ausgangsklemmen (PE1, PE2) umfassen, an einer relativ oberen Position angeordnet sind,
der Verbindungsabschnitt der 1.-2 Stromschiene (B1-2) und der Verbindungsabschnitt der 2.-2 Stromschiene (B2-2), die sich über die untere Position unter den ersten und zweiten Stromschienen (B1, B2) erstrecken, an einer relativ unteren Position in der zweiten Richtung angeordnet sind, und
das Abdeckstück (CV) an einem unteren Anschnitt der ersten und zweiten Anschlussöffnungen (EH1, EH2) ausgebildet ist, die sich über den Verbindungsabschnitt der 1.-2 Stromschiene (B1-2) oder den Verbindungsabschnitt der 2.-2 Stromschiene (B2-2) erstrecken.

19. Batteriepack nach einem der Ansprüche 16 bis 18, wobei die 1.-1 Stromschiene (B1-1) oder die 2.-1 Stromschiene (B2-1) umfasst: die 1.-1 Verbindungseinheit (C1-1) oder die 2.-1 Verbindungseinheit (C2-1), die auf der Seitenplatte (SP1, SP2) angeordnet ist, und ein Paar 1.-1 Verzweigungsabschnitte (A1-1) oder ein Paar 2.-1 Verzweigungsabschnitte (A2-1), die mit dem Elektrodenanschluss (E1, E2) verbunden sind, der von der 1.-1 Verbindungseinheit (C1-1) oder der 2.-1 Verbindungseinheit (C2-1) erstreckt und durch die ersten und zweiten Anschlussöffnungen (EH1, EH2) der Seitenplatte (SP1, SP2) nach außen freigelegt ist, und stufenförmig nach außen von der 1.-1 Verbindungseinheit (C1-1) oder der 2.-1 Verbindungseinheit (C2-1) ausgebildet sind, und
die 1.-2 Stromschiene (B1-2) oder die 2.-2 Stromschiene (B2-2) umfasst: ein Paar 1.-2 Verzweigungsabschnitte (A1-2) oder ein Paar 2.-2 Verzweigungsabschnitte (A2-2), die mit dem Elektrodenanschluss (E1, E2) verbunden sind, der durch die ersten und zweiten Anschlussöffnungen (EH1, EH2) der Seitenplatte (SP1, SP2) nach außen freigelegt ist, und die 1.-2 Verbindungseinheit (C1-2) oder die 2.-2 Verbindungseinheit (C2-2), die das Paar 1.-2 Verzweigungsabschnitte (A1-2) oder das Paar 2.-2 Verzweigungsabschnitte (A2-2) miteinander verbindet und stufenförmig nach außen von dem Paar 1.-2 Verzweigungsabschnitte (A1-2) oder dem Paar 2.-2 Verzweigungsabschnitte (A2-2) ausgebildet ist, um das Abdeckstück (CV) aufzunehmen.

## Revendications

1. Bloc-batterie (P) comportant :
une pluralité de cellules de batterie (10) agencées d'avant en arrière dans une première direction, chacune ayant une paire de surfaces principales (M) agencées pour se faire face dans une première direction et incluant des surfaces supérieures et inférieures (U, L) formant une paire de côtés longs se faisant face, et des première et deuxième surfaces latérales (S1, S2) formant une paire de côtés courts se faisant face, une paire des surfaces supérieure et inférieure (U, L) et une paire des première et deuxième surfaces latérales (S1, S2) connectant la paire de surfaces principales (M) entre elles, respectivement ;
des première et deuxième barres omnibus (B1, B2) connectant électriquement la pluralité de cellules de batterie (10) entre elles, et connectant électriquement les cellules de batterie (10) agencées alternativement de manière à ne pas être adjacentes l'une à l'autre dans la première direction sur les première et deuxième surfaces latérales (S1, S2), respectivement ; **caractérisé par**
des première et deuxième bornes de sortie (PE1, PE2) formées ensemble sur une face avant de la pluralité de cellules de batterie (10) dans la première direction et une troisième barre omnibus (B3) qui connecte électriquement entre elles des cellules de batterie (10) adjacentes en déviant une face arrière de la pluralité de cellules de batterie (10).

2. Bloc-batterie (P) selon la revendication 1, dans lequel les première et deuxième bornes de sortie (PE1, PE2) partent de première et deuxième cellules de batterie agencées adjacentes l'une à l'autre à une position avant parmi la pluralité de cellules de batterie (10), et
la troisième barre omnibus (B3) connecte une n-1^{ième} cellule de batterie et une n^{ième} cellule de batterie, n>1, n étant un nombre entier, disposées adjacentes l'une à l'autre à une position arrière parmi la pluralité de cellules de batterie (10).

3. Bloc-batterie (P) selon la revendication 1 ou 2, comportant en outre une plaque de refroidissement supérieure (51) et une plaque de refroidissement inférieure (52) disposées respectivement sur les surfaces supérieure et inférieure (U, L) formant le côté long de la cellule de batterie (10).

4. Bloc-batterie (P) selon l'une quelconque des revendications 1 à 3, dans lequel les surfaces supérieure et inférieure (U, L) des cellules de batterie (10) se font face dans une direction haut-bas, dans une deuxième direction croisant la première direction, et
les première et deuxième surfaces latérales (S1, S2) de la cellule de batterie (10) se font face dans une troisième direction qui croise les première et deuxième directions.

5. Bloc-batterie (P) selon l'une quelconque des revendications 1 à 4, dans lequel la première barre omnibus (B1) ou la deuxième barre omnibus (B2) comporte une pluralité de premières barres omnibus (B1-1, B1-2) ou de deuxièmes barres omnibus (B2-1, B2-2) qui connectent électriquement entre elles des cellules de batterie non adjacentes sur les première ou deuxième surfaces latérales (S1, S2) de la cellule de batterie,
dans lequel la pluralité de premières barres omnibus (B1-1, B1-2) ou de deuxièmes barres omnibus (B2-1, B2-2) comportent :
une 1re-1 barre omnibus (B1-1) ou une 2e-1 barre omnibus (B1-2) qui connecte entre elles des cellules de batterie (10) non adjacentes tout en contournant une position supérieure relativement adjacente à la surface supérieure (U) de manière à ne pas provoquer de court-circuit entre elles ; et
une 1re-2 barre omnibus (B2-1) ou une 2e-2 barre omnibus (B2-2) qui connecte entre elles des cellules de batterie (10) non adjacentes tout en contournant une position inférieure relativement adjacente à la surface inférieure (L) de manière à ne pas provoquer de court-circuit entre elles.

6. Bloc-batterie selon la revendication 5, dans lequel la 1re-1 barre omnibus (B1-1) et la 1re-2 barre omnibus (B1-2) sont agencées pour venir en prise en une forme de peigne de manière à s'imbriquer l'une dans l'autre sur la première surface latérale (S1) de la cellule de batterie (10) et connecter différentes paires de cellules de batterie (10) qui sont adaptées pour ne pas être adjacentes l'une à l'autre sans court-circuit en déviant la position supérieure et la position inférieure, respectivement, et
la 2e-1 barre omnibus (B2-1) et la 2e-2 barre omnibus (B2-2) sont agencées pour venir en prise en une forme de peigne de manière à s'imbriquer l'une dans l'autre sur la deuxième surface latérale (S2) de la cellule de batterie (10) et connecter différentes paires de cellules de batterie (10) qui sont adaptées pour ne pas être adjacentes l'une à l'autre sans court-circuit en déviant la position supérieure et la position inférieure, respectivement, ou
dans lequel la 1re-1 barre omnibus (B1-1) comporte une 1re-1 unité de connexion (C1-1) s'étendant dans la première direction au niveau de la position supérieure et une paire de 1res-1 parties de dérivation (A1-1) s'étendant des deux extrémités de la 1re-1 unité de connexion (C1-1) vers la position inférieure et connectées aux bornes d'électrode (E1, E2) des cellules de batterie (10) qui ne sont pas adjacentes les unes aux autres, et
la 1re-2 barre omnibus (B1-2) comporte une 1re-2 unité de connexion (C1-2) s'étendant dans la première direction au niveau de la position inférieure et une paire de 1res-2 parties de dérivation (A1-2) s'étendant des deux extrémités de la 1re-2 unité de connexion (C1-2) vers la position supérieure et connectées aux bornes d'électrode (E1, E2) des cellules de batterie (10) qui ne sont pas adjacentes les unes aux autres.

7. Bloc-batterie (P) selon l'une des revendications 5 ou 6, dans lequel la 2e-1 barre omnibus (B2-1) comporte une 2e-1 unité de connexion (C2-1) s'étendant le long d'une première direction au niveau d'une position supérieure, et une paire de 2e-1 parties de dérivation (A2-1) s'étendant des deux extrémités de la 2e-1 unité de connexion (C2-1) vers la position inférieure et connectées aux bornes d'électrode (E1, E2) des cellules de batterie (10) qui ne sont pas adjacentes les unes aux autres, et
la 2e-2 barre omnibus (B2-2) comporte une 2e-2 unité de connexion (C2-2) s'étendant dans la première direction au niveau de la position inférieure, et une paire de 2e-2 parties de dérivation (A2-2) s'étendant des deux extrémités de la 2e-2 unité de connexion (C2-2) vers la position supérieure et connectées aux bornes d'électrode (E1, E2) des cellules de batterie (10) qui ne sont pas adjacentes les unes aux autres.

8. Bloc-batterie selon l'une quelconque des revendications 1 à 7, dans lequel la troisième barre omnibus (B3)
- s'étend pour entourer une plaque d'extrémité arrière (EP2) disposée à la position arrière de la pluralité de cellules de batterie (10) et est pliée sur les première et deuxième surfaces latérales opposées (S1, S2) de la n-1^{ième} cellule de batterie et de la n^{ième} cellule de batterie adjacentes l'une à l'autre à la position arrière, et/ou
- connecte la n-1^{ième} cellule de batterie et la n^{ième} cellule de batterie agencées adjacentes l'une à l'autre au niveau de la position arrière via une barre de connexion arrière (RC).

9. Bloc-batterie selon la revendication 8, 2^{e} variante, dans lequel la barre de connexion arrière (RC) comporte :
une première partie (RC1) s'étendant dans la première direction dans laquelle la troisième barre omnibus (B3) s'étend au niveau de la position supérieure sur les première et deuxième surfaces latérales (S1, S2) de la n-1^{ième} cellule de batterie et de la n^{ième} cellule de batterie ; et
une deuxième partie (RC2) s'étendant de la première partie (RC1) vers la position inférieure et connectée aux bornes d'électrode (E1, E2) de la n-1^{ième} cellule de batterie et de la n^{ième} cellule de batterie.

10. Bloc-batterie (P) selon l'une quelconque des revendications 1 à 9, comportant en outre des premier et deuxième organes de connexion de borne (P1, P2) incluant chacun d'autres extrémités formant les première et deuxième bornes de sortie (PE1, PE2) sur une plaque d'extrémité avant (EP1) disposée au niveau de la position avant de la pluralité de cellules de batterie (10), tout en s'étendant dans la première direction à partir d'une extrémité connectée à la borne d'électrode (E1, E2) des première et deuxième cellules de batterie (10) agencées adjacentes l'une à l'autre au niveau de la position avant parmi la pluralité de cellules de batterie (10).

11. Bloc-batterie selon la revendication 10, dans lequel les premier et deuxième organes de connexion de borne (P1, P2) sont connectés aux première et deuxième cellules de batterie (10) agencées adjacentes l'une à l'autre dans la position avant via une barre de connexion avant (FC).

12. Bloc-batterie selon la revendication 11, dans lequel la barre de connexion avant (FC) comporte :
une première partie (FC1) s'étendant dans la première direction dans laquelle les premier et deuxième organes de connexion de borne (P1, P2) s'étendent à des positions supérieures sur des première et deuxième surfaces latérales (S1, S2) des première et deuxième cellules de batterie (10) ; et
une deuxième partie (FC2) s'étendant de la première partie (FC1) vers la position inférieure et connectée aux bornes d'électrode (E1, E2) des première et deuxième cellules de batterie (10).

13. Bloc-batterie (P) selon l'une quelconque des revendications 5 à 12, dans lequel une partie de connexion de la 1re-1 barre omnibus (B1-1) et une partie de connexion de la 2e-1 barre omnibus (B2-1) s'étendant sur la position supérieure entre les première et deuxième barres omnibus, une première partie (RC1) de la barre de connexion arrière (RC) connectée à la troisième barre omnibus (B3), et une première partie des premier et deuxième organes de connexion de borne (P1, P2) incluant les première et deuxième bornes de sortie (PE1, PE2) sont disposées au niveau de la position supérieure du même deuxième niveau dans la deuxième direction correspondant à la direction haut-bas.

14. Bloc-batterie (P) selon l'une quelconque des revendications 5 à 13, dans lequel une partie de connexion de la 1re-2 barre omnibus (B1-2) et la partie de connexion de la 2e-2 barre omnibus (B2-2) s'étendant sur la position inférieure entre les première et deuxième barres omnibus (B1, B2) sont disposées à la position inférieure du même premier niveau dans la deuxième direction correspondant à la direction haut-bas.

15. Bloc-batterie (P) selon l'une quelconque des revendications 1 à 14, dans lequel les première et deuxième barres omnibus (B1, B2) sont disposées sur une paire de plaques latérales (SP1, SP2) s'étendant sur les première et deuxième surfaces latérales (S1, S2) pour recouvrir les première et deuxième surfaces latérales (S1, S2) de la pluralité de cellules de batterie (10) et sont connectées électriquement aux bornes d'électrode (E1, E2) exposées à travers des premier et deuxième trous de borne (EH1, EH2) formés dans la plaque latérale (SP1, SP2).

16. Bloc-batterie (P) selon la revendication 15, comportant en outre des pièces de recouvrement (CV) dans les premier et deuxième trous de borne (EH1, EH2) pour fermer une partie des premier et deuxième trous de borne (EH1, EH2).

17. Bloc-batterie (P) selon la revendication 16, dans lequel les pièces de recouvrement (CV) empêchent la première barre omnibus ou la deuxième barre omnibus connectant électriquement une paire de cellules de batterie qui sont alternativement adaptées l'une à l'autre sur la première ou la deuxième surface latérale (S1, S2) de la cellule de batterie (10) d'être connectées par erreur à une cellule de batterie (10) interposée entre une paire des cellules de batterie (10) à connecter entre elles en tant que cible de connexion.

18. Bloc-batterie (P) selon la revendication 16 ou 17, dans lequel la partie de connexion de la 1re-1 barre omnibus (B1-1) et la partie de connexion de la 2e-1 barre omnibus (B2-1) s'étendant sur la position supérieure entre les première et deuxième barres omnibus (B1, B2), une première partie (RC1) de la barre de connexion arrière (RC) connectée à la troisième barre omnibus (B3), et la première partie des premier et deuxième organes de connexion de borne (P1, P2) incluant les première et deuxième bornes de sortie (PE1, PE2) sont disposées à une position relativement supérieure,
la partie de connexion de la 1re-2 barre omnibus (B1-2) et la partie de connexion de la 2e-2 barre omnibus (B2-2) s'étendant sur la position inférieure entre les première et deuxième barres omnibus (B1, B2) sont disposées à une position relativement inférieure dans la deuxième direction, et
la pièce de recouvrement (CV) est formée sur une partie inférieure des premier et deuxième trous de borne (EH1, EH2) s'étendant à travers la partie de connexion de la 1re-2 barre omnibus (B1-2) ou la partie de connexion de la 2e-2 barre omnibus (B2-2).

19. Bloc-batterie selon l'une quelconque des revendications 16 à 18, dans lequel la 1re-1 barre omnibus (B1-1) ou la 2e-1 barre omnibus (B2-1) comporte la 1re-1 unité de connexion (C1-1) ou la 2e-1 unité de connexion (C2-1) disposée sur la plaque latérale (SP1, SP2) et une paire de 1res-1 parties de dérivation (A1-1) ou une paire de 2e-1 parties de dérivation (A2-1) qui sont connectées à la borne d'électrode (E1, E2) s'étendant à partir de la 1re-1 unité de connexion (C1-1) ou de la 2e-1 unité de connexion (C2-1) et exposée à l'extérieur de la plaque latérale (SP1, SP2) à travers les premier et deuxième trous de borne (EH1, EH2) de la plaque latérale (SP1, SP2) et sont formés pour être progressivement vers l'extérieur à partir de la 1re-1 unité de connexion (C1-1) ou de la 2e-1 unité de connexion (C2-1), et
la 1re-2 barre omnibus (B1-2) ou la 2e-2 barre omnibus (B2-2) comporte une paire de 1res-2 parties de dérivation (A1-2) ou une paire de 2es-2 parties de dérivation (A2-2) connectées à la borne d'électrode (E1, E2) exposée à l'extérieur de la plaque latérale (SP1, SP2) à travers les premier et deuxième trous de borne (EH1, EH2) de la plaque latérale (SP1, SP2), et la 1re-2 unité de connexion (C1-2) ou la 2e-2 unité de connexion (C2-2) qui connectent la paire de 1res-2 parties de dérivation (A1-2) ou la paire de 2es-2 parties de dérivation (A2-2) entre elles et formées pour être progressivement vers l'extérieur à partir de la paire de 1res-2 parties de dérivation (A1-2) ou de la paire de 2e-2 parties de dérivation (A2-2) pour accueillir la pièce de recouvrement (CV).
